# EUROPEAN PATENT APPLICATION

(11) **EP 4 801 044 A1**
(43) Date of publication of application: **02.09.2026**
(21) Application number: 24887543.7
(22) Date of filing: 15.08.2024
(51) Int. Cl.: H04N 21/4363, H04N 7/08

(54) **SHORT-RANGE COMMUNICATION METHOD, AND ELECTRONIC DEVICE AND COMMUNICATION SYSTEM**

(30) Priority: 09.11.2023 CN 202311497923
(71) Applicant: Huawei Technologies Co., Ltd., Shenzhen, Guangdong 518129 (CN)
(72) Inventor: WANG, Wei, Shenzhen, Guangdong 518129 (CN); ZHANG, Junping, Shenzhen, Guangdong 518129 (CN); LENG, Yongqiang, Shenzhen, Guangdong 518129 (CN)
(74) Representative: Maiwald GmbH
(86) International application number: PCT/CN2024/112544
(87) International publication number: WO 2025/097923

(57) **Abstract**

A short-range communication method, an electronic device, and a communication system are provided, relating to the field of communication technologies. The method is applied to a first device equipped with a screen. The first device may obtain, based on information to be sent to be sent, a digital sequence indicating N signals, and display N frames of a first image on the screen. These N frames of the first image correspond to N frames of a second image, and the N frames of the second image are the content displayed on the screen of the first device when a screen communication function is not enabled. To a user, the visual perception result of the N frames of the first image is the same as that of the N frames of the second image. A variation pattern of color information of the N frames of the first image is related to a variation pattern of the N signals. This method allows the user of the first device to remain unaware of the ongoing data transmission, and enables a second device with a camera function to scan the N frames of the first image and perform demodulation to obtain the information to be sent to be sent from the first device. This method offers simple operation and excellent directivity, thereby improving user experience.

## Description

This application claims priority to Chinese Patent Application No. 202311497923.8, filed with the China National Intellectual Property Administration on November 9, 2023 and entitled "SHORT-RANGE COMMUNICATION METHOD, ELECTRONIC DEVICE, AND COMMUNICATION SYSTEM", which is incorporated herein by reference in its entirety.

### TECHNICAL FIELD

This application relates to the field of communication technologies, and in particular, to a short-range communication method, an electronic device, and a communication system.

### BACKGROUND

With the development of communication technologies, short-range communication technologies, such as Bluetooth (Bluetooth, BT) and wireless fidelity (wireless fidelity, Wi-Fi), are widely used in daily life. Generally, before devices can engage in short-range communication, a connection needs to be established. This process often requires users to manually search for the target device and enter a password. This operation is complex and results in poor user experience.

### SUMMARY

This application provides a short-range communication method, an electronic device, and a communication system, aiming to simplify user operations in short-range communication and improve user experience.

To achieve the foregoing objective, the following technical solutions are used in this application.

According to a first aspect, a short-range communication method is provided. The method may be performed by a first device configured with a screen. The first device herein may refer to the first device itself, or may refer to a processor, a module, a logical node, a chip, a chip system, or the like that is in the first device and that implements the method.

The method includes: obtaining, based on information to be sent, a first digital sequence indicating N signals; and continuously displaying N frames of the first image on a screen of the first device. The N frames of the first image correspond to N consecutive frames of the second image, the N frames of the second image are the content displayed on the screen of the first device when a screen communication function is not enabled on the first device, a visual perception result of the N frames of the first image by a user is the same as a visual perception result of the N frames of the second image by the user, a variation pattern of color information of the N frames of the first image is related to a variation pattern of the N signals, color information of an i^{th} frame of the first image indicates an accumulated color value of pixels in the i^{th} frame of the first image, N is an integer greater than 1, and i is an integer greater than 1 and less than or equal to N.

Based on the method provided in the first aspect, the first device may modulate the information to be sent to the N frames of the first image displayed on the first device. In this way, a device with a camera function or a camera function, for example, a second device, may scan the N frames of the first image and perform demodulation to restore the information to be sent, so as to implement "communication" between devices. In the foregoing "communication" process, a device to be "communicated" may be selected by adjusting an orientation of the device 102, and a user does not need to manually search for the device. This operation is simple, is with good directivity, and can improve user experience. In addition, because the visual perception result of the user on the N frames of the first image is the same as the visual perception result of the user on the N frames of the second image, for the user, the information to be sent fused in the first image is "transparent", imperceptible to the user, and does not affect use of the first device by the user.

In a possible implementation, that the visual perception result of the user on the N frames of the first image is the same as the visual perception result of the user on the N frames of the second image includes: A screen refresh rate of the first device is greater than or equal to a first threshold; an absolute value of a difference between a luminance of a first pixel in the i^{th} frame of the first image and a luminance of the first pixel in an i^{th} frame of the second image is less than or equal to a second threshold, where the first pixel is any pixel on the screen of the first device; and an absolute value of a difference between first color information and second color information is less than or equal to a third threshold, where the first color information is color information of the first pixel in M consecutive frames of the first image among the N frames of the first image, the second color information is color information of the first pixel in M frames of the second image corresponding to the M frames of the first image, and M is an integer greater than 1 and less than or equal to N.

It may be understood that, when two different colors flicker alternately, but a luminance change is not great, and a flickering frequency is greater than a specific value, human eyes perceive a fused color, and cannot perceive color flickering. Therefore, based on the foregoing possible implementation, the user cannot distinguish between the first image and the second image. In other words, information about the N signals fused in the N frames of the first image is "transparent" to the user, and does not affect content originally to be displayed on the screen.

In a possible implementation, the obtaining the first digital sequence based on the information to be sent includes: modulating the information to be sent at a first bandwidth and a first frequency to obtain the first digital sequence.

Based on the foregoing possible implementation, the information to be sent may be modulated to obtain the first digital sequence. For example, digital baseband modulation may be performed on the information to be sent to obtain a first bit sequence, and phase modulation is performed on the first bit sequence at the first bandwidth and the first frequency to obtain the first digital sequence.

In a possible implementation, that the variation pattern of the color information of the N frames of the first image is related to the variation pattern of the N signals includes: Within the first bandwidth, the variation pattern of the color information of the N frames of the first image is related to the variation pattern of the N signals in the frequency domain, or the variation pattern of the color information of the N frames of the first image is related to the variation pattern of the N signals in the time domain.

Based on the foregoing possible implementation, the information about the N signals may be fused in the color information of the N frames of the first image, so that the device with the camera function scans the first image and performs demodulation based on a change of the color information, to restore the information to be sent.

In a possible implementation, the first frequency is less than or equal to half of the screen refresh rate of the first device.

It may be understood that during phase modulation, a modulation frequency is usually not greater than half of a current refresh rate of a screen. Therefore, the first frequency is less than or equal to half of the screen refresh rate of the first device. In addition, a higher modulation frequency indicates information, that is more "transparent" to the user, about the N signals fused with N frames of the first image. Therefore, if the first frequency is equal to half of the screen refresh rate of the first device, the user can have weakest perception of the N signals fused with the N frames of the first image. If the first frequency is less than the screen refresh rate of the first device, computational power of the first device can be reduced, and power consumption can be reduced.

In a possible implementation, the method further includes: continuously displaying R frames of the first image on the screen of the first device, where the R frames of the first image correspond to R consecutive frames of the second image, the R frames of the second image are the content displayed on the screen of the first device when the screen communication function is not enabled on the first device, a visual perception result of on the R frames of the first image by a user is the same as a visual perception result of the R frames of the second image by the user, a variation pattern of color information of the R frames of the first image is related to a variation pattern of R signals, the R signals are signals indicated by a synchronization sequence, R is an integer greater than 1, color information of a j^{th} frame of the first image indicates an accumulated color value of pixels in the j^{th} frame of the first image, j is an integer greater than 1 and less than or equal to R, and a time period in which the R frames of the first image are displayed on the screen of the first device is different from a time period in which the N frames of the first image are displayed on the screen of the first device.

Based on the foregoing possible implementation, the first device may modulate the synchronization sequence to the R frames of the first image displayed on the first device, so that the device with the camera function may determine the N frames of the first image from scanned images based on the R frames of the first image.

In a possible implementation, the method further includes: obtaining the synchronization sequence, where the synchronization sequence is modulated at a second frequency, and the second frequency is different from the first frequency.

Based on the foregoing possible implementation, the device with the camera function may determine the R frames of the first image based on the second frequency, and further determine the N frames of the first image from the scanned images based on the R frames of the first image.

In a possible implementation, the method further includes: the continuously displaying the N frames of the first image on the screen of the first device includes: fusing the N signals with the N frames of the second image respectively, and continuously displaying the N frames of the first image on the screen of the first device.

Based on the foregoing possible implementation, the first device may respectively fuse the N signals in the N frames of the second image, to modulate the information to be sent to the N frames of the first image.

In a possible implementation, each frame of the first image includes P areas, positions and sizes of the P areas in any two frames of the first image are the same, the first digital sequence further indicates (P-1)*N signals, the first digital sequence includes P sequences, each sequence indicates N consecutive signals among P*N signals, the P areas correspond to the P sequences, a variation pattern of color information of N frames in each area is related to a variation pattern of N consecutive signals corresponding to the area, and P is an integer greater than 1.

Based on the foregoing possible implementation, the first image may be divided into areas, and N frames of color information of each area are fused with different signals. In this way, the device with the camera function scans one frame of the first image, to demodulate a plurality of signals, thereby shortening duration of scanning the first image by the device.

In a possible implementation, a variation pattern of luminance information of the N frames of the first image is related to the variation pattern of the N signals.

Based on the foregoing possible implementation, the first device may further fuse the information about the N signals in the luminance information of the N frames of the first image.

In a possible implementation, luminance information of the i^{th} frame of the first image indicates an accumulated luminance value of pixels in the i^{th} frame of the first image.

Based on the foregoing possible implementation, the luminance information of the i^{th} frame of the first image may be determined.

In a possible implementation, that the variation pattern of the luminance information of the N frames of the first image is related to the variation pattern of the N signals includes: Within the first bandwidth, the variation pattern of the luminance information of the N frames of the first image is related to the variation pattern of the N signals in the frequency domain, or the variation pattern of the luminance information of the N frames of the first image is related to the variation pattern of the N signals in the frequency domain, where the first bandwidth is a modulation bandwidth of the first digital sequence.

Based on the foregoing possible implementation, the device with the camera function may scan the N frames of the first image, perform demodulation based on a change of the luminance information, to restore the information to be sent.

In a possible implementation, each frame of the first image includes the P areas, the positions and the sizes of the P areas included in any two frames of the first image are the same, the first digital sequence further indicates the (P-1)*N signals, the first digital sequence includes the P sequences, each sequence indicates the N consecutive signals among the P*N signals, the P areas correspond to the P sequences, a variation pattern of luminance information of the N frames in each area is related to the variation pattern of the N consecutive signals corresponding to the area, and P is an integer greater than 1.

Based on the foregoing possible implementation, the first image may be divided into areas, and N frames of luminance information of each area are fused with different signals. In this way, the device with the camera function scans one frame of the first image, to demodulate a plurality of signals, thereby shortening duration of scanning the first image by the device.

In a possible implementation, the method further includes: accessing a first network; obtaining a first capture frame rate, where the first capture frame rate is a lowest capture frame rate in a capture frame rate supported by a device with a camera function in the first network; and setting the screen refresh rate of the first device based on the first capture frame rate.

Based on the foregoing possible implementation, the first device may set the refresh rate based on the lowest capture frame rate in the capture frame rate supported by the device with the camera function in the first network, so that when the device with the camera function in the first network scans the N frames of the first image, a capture frame rate used by the device is greater than or equal to the screen refresh rate of the first device, to scan the N frames of the first image.

In a possible implementation, the method further includes: receiving first indication information, where the first indication information indicates to enable the screen communication function.

Based on the foregoing possible implementation, the first device may enable the screen communication function based on the indication.

According to a second aspect, a short-range communication method is provided. The method may be performed by a second device with a camera function. The second device herein may refer to the second device itself, or may refer to a processor, a module, a logical node, a chip, a chip system, or the like that is in the second device and that implements the method. In this application, the camera function may be replaced with a photo function.

The method includes: scanning, by using the camera function, N frames of the first image displayed on a screen of a first device, and performing demodulation to obtain information to be received, where N is an integer greater than 1.

Based on the method provided in the second aspect, the second device may scan the N frames of the first image displayed on the screen of the first device, and perform demodulation to obtain the information that the first device needs to "send" to the second device, so as to implement "communication" between the first device and the second device.

In a possible implementation, the method further includes: accessing a first network; obtaining a first capture frame rate, where the first capture frame rate is a lowest capture frame rate in a capture frame rate supported by a device with a camera function in the first network; and setting a capture frame rate of the camera function based on the first capture frame rate.

Based on the foregoing possible implementation, the second device may set the capture frame rate of the camera function based on the lowest capture frame rate in the capture frame rate supported by the device with the camera function in the first network, to scan the N frames of the first image.

In a possible implementation, the method further includes: sending first indication information, where the first indication information indicates to enable a screen communication function.

Based on the foregoing possible implementation, a screened device (for example, the first device) may be indicated to enable the screen communication function.

In a possible implementation, the method further includes: sending second indication information, where the second indication information indicates a capture frame rate supported by the second device.

Based on the foregoing possible implementation, the supported capture frame rate may be sent, so that a device that receives the second indication information, for example, a host in the first network, determines the first capture frame rate.

According to a third aspect, an electronic device is provided, and is configured to implement the method provided in the first aspect. The electronic device may be the first device in the first aspect. The electronic device includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the electronic device may include a processing module and a display module. The processing module may be configured to implement a processing function in any one of the first aspect and the possible implementations of the first aspect. The processing module may be, for example, a processor. The display module may also be referred to as an interface unit, and is configured to implement a display function in any one of the first aspect and the possible implementations of the first aspect. The display module may be, for example, a display.

With reference to the third aspect, in a possible implementation, the electronic device further includes an interface module. The interface module may also be referred to as an interface unit, and is configured to implement a sending function and/or a receiving function in any one of the first aspect and the possible implementations of the first aspect. The interface module may include an interface circuit, a transceiver machine, a transceiver, or a communication interface.

With reference to the third aspect, in a possible implementation, the interface module includes a sending module and a receiving module that are respectively configured to implement the sending unction and the receiving function in any one of the first aspect and the possible implementations of the first aspect.

According to a fourth aspect, an electronic device is provided, and is configured to implement the method provided in the second aspect. The electronic device may be the second device in the second aspect. The electronic device includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the electronic device may include a processing module. The processing module may be configured to implement a processing function in any one of the second aspect and the possible implementations of the second aspect. The processing module may be, for example, a processor.

With reference to the fourth aspect, in a possible implementation, the electronic device may further include an interface module. The interface module may also be referred to as an interface unit, and is configured to implement a sending function and/or a receiving function in any one of the second aspect and the possible implementations of the second aspect. The interface module may include an interface circuit, a transceiver machine, a transceiver, or a communication interface.

With reference to the fourth aspect, in a possible implementation, the interface module includes a sending module and a receiving module that are respectively configured to implement the sending unction and the receiving function in any one of the second aspect and the possible implementations of the second aspect.

According to a fifth aspect, an electronic device is provided, and includes a processor. The processor is configured to: be coupled to a memory, and after reading instructions in the memory, perform the method in any one of the foregoing aspects based on the instructions. The electronic device may be the first device in the first aspect, or the electronic device may be the second device in the second aspect.

With reference to the fifth aspect, in a possible implementation, the electronic device further includes a memory. The memory is configured to store program instructions and data. Optionally, the memory and the processor are integrated together, or the memory is independent of the processor.

With reference to the fifth aspect, in a possible implementation, the electronic device is a chip or a chip system. Optionally, when the electronic device is a chip system, the electronic device may include a chip, or may include a chip and another discrete component.

According to a sixth aspect, an electronic device is provided, and includes a processor and an interface circuit. The interface circuit is configured to receive a computer program or instructions, and transmit the computer program or the instructions to the processor. The processor is configured to execute the computer program or the instructions, to cause the electronic device to perform the method in any one of the foregoing aspects. The electronic device may be the first device in the first aspect, or the electronic device may be the second device in the second aspect.

With reference to the sixth aspect, in a possible implementation, the electronic device is a chip or a chip system. Optionally, when the electronic device is a chip system, the electronic device may include a chip, or may include a chip and another discrete component.

According to a seventh aspect, a computer-readable storage medium is provided. The computer-readable storage medium stores instructions. When the instructions are run on a computer, the computer is caused to perform the method in any one of the foregoing aspects.

According to an eighth aspect, a computer program product including instructions is provided. When the computer program product is run on a computer, the computer is caused to perform the method in any one of the foregoing aspects.

According to a ninth aspect, a communication system is provided. The communication system includes the first device configured to perform the method in the first aspect and the second device configured to perform the method in the second aspect.

For technical effects achieved by any one of the possible implementations of the third aspect to the ninth aspect, refer to technical effects achieved by any one of the first aspect and the second aspect or different possible implementations of the first aspect or the second aspect. Details are not described herein again.

It may be understood that the solutions in the foregoing aspects may be combined if the solutions are not contradictory.

### BRIEF DESCRIPTION OF DRAWINGS

FIG. 1 is a diagram of an architecture of a communication system according to this application;
FIG. 2 is a diagram of a hardware structure of an electronic device according to this application;
FIG. 3 is a first schematic flowchart of a short-range communication method according to this application;
FIG. 4A is a first diagram of a first digital sequence according to this application;
FIG. 4B is a diagram of fusion of a signal and a second image according to this application;
FIG. 5A is a second diagram of a first digital sequence according to this application;
FIG. 5B is a diagram of a variation pattern of 120 frames of the first image in the time domain according to this application;
FIG. 5C is a first diagram of a variation pattern of an R channel of 120 frames of the first image in the frequency domain according to this application;
FIG. 5D is a diagram of color information and luminance information of 120 frames of the second image according to this application;
FIG. 5E is a diagram of a variation pattern of an R channel of 120 frames of the first image in the time domain according to this application;
FIG. 5F is a second diagram of a variation pattern of an R channel of 120 frames of the first image in the frequency domain according to this application;
FIG. 6 is a diagram of areas in a first image according to this application;
FIG. 7 is a diagram of accessing a first network by a device according to this application;
FIG. 8 is a second schematic flowchart of a short-range communication method according to this application;
FIG. 9 is a first diagram of a structure of an electronic device according to this application; and
FIG. 10 is a second diagram of a structure of an electronic device according to this application.

### DESCRIPTION OF EMBODIMENTS

To simplify user operations in short-range communication, this application provides a short-range communication method. The method may be applied to a first device and a second device. The first device is configured with a screen, and the second device has a camera function. In the method, the first device may obtain, based on information to be sent, a first digital sequence that may indicate N signals; and continuously display N frames of the first image on the screen of the first device. A variation pattern of color information of the N frames of the first image is related to a variation pattern of the N signals, color information of an i^{th} frame of the first image among the N frames of the first image indicates an accumulated color value of pixels in the i^{th} frame of the first image, i is an integer greater than 1 and less than or equal to N, and N is an integer greater than 1. The second device may scan, by using the camera function, the N frames of the first image displayed on the screen of the first device, and perform demodulation to obtain the information to be received. In this application, the camera function is mainly used to scan an image displayed on the screen of the first device. Therefore, the camera function may be replaced with another function that can implement the foregoing function, for example, a camera function. This is not limited. For ease of description, the camera function is used as an example for description in this application.

It may be understood that the N frames of the first image displayed on the first device are fused with information that is about the N signals and that corresponds to the information to be sent. The second device scans the N frames of the first image by using the camera function, and performs demodulation to obtain the information to be sent of the first device (that is, the information of the second device to be received). In the foregoing process, a user of the first device does not need to participate, and a user of the second device does not need to search for the first device either, but adjusts an orientation of the second device, so that a camera module of the second device is quickly aligned with the screen of the first device, and scans the N frames of the first image displayed on the screen of the first device, to implement "communication" between the first device and the second device. Therefore, the foregoing method is simple to operate, is with good directivity, and can improve user experience.

In some embodiments, the N frames of the first image correspond to N consecutive frames of the second image. The N frames of the second image are the content displayed on the screen of the first device when a screen communication function is not enabled on the first device. A visual perception result of the N frames of the first image by a user is the same as a visual perception result of the N frames of the second image by the user. In other words, the i^{th} frame of the first image is an image obtained by fusing an i^{th} signal with an i^{th} frame of the second image. Meanwhile, the user cannot distinguish between the first image and the second image. In other words, the information about the N signals fused with the N frames of the first image is "transparent" to the user, and does not affect content originally to be displayed on the screen. In this way, communication between the first device and the second device is imperceptible to the user, and does not affect use of the first device by the user, thereby further improving user experience.

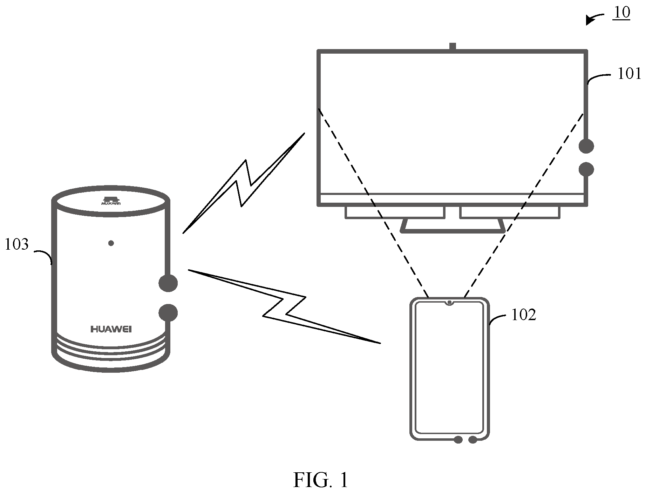

The method provided in this application may be applied to various communication systems in which a screen device communicates with a camera device. The following uses a communication system 10 shown in FIG. 1 as an example to describe the method provided in embodiments of this application. FIG. 1 is merely a diagram, and does not constitute a limitation on an applicable scenario of the technical solutions provided in this application.

FIG. 1 is a diagram of an architecture of a communication system 10 according to this application. In FIG. 1, the communication system 10 may include a device 101 (corresponding to the first device in Summary) and a device 102 (corresponding to the second device in Summary). Optionally, the communication system 10 further includes a device 103 that may be communicatively connected to the device 101 and the device 102. The device 101 is configured with a screen to display an image fused with information to be sent. The device 102 has a camera function. For example, a camera is configured in the device 102, to scan an image displayed on the screen of the device 101. The device 103 may assist the device 101 and the device 102 in implementing communication between the device 101 and the device 102. For example, the device 103 may assist the device 101 in setting a screen refresh rate, and assist the device 102 in setting a capture frame rate, so that the capture frame rate of the device 102 is greater than or equal to the screen refresh rate of the device 101, to ensure that the device 102 can capture an image displayed on the device 101.

In FIG. 1, the device 103 may communicate with the device 101 in a wired manner or a wireless manner, and the device 103 may communicate with the device 102 in a wired manner or a wireless manner. In this application, wireless communication includes but is not limited to Bluetooth communication, cellular communication, NearLink standard communication, or wireless fidelity (wireless fidelity, Wi-Fi) communication. The cellular communication is, for example, 4th generation (4th generation, 4G) communication, 5th generation (5th generation, 5G) communication, or future evolved communication (for example, 6th generation (6th generation, 6G) communication).

In some embodiments, the device 101 and the device 102 may be located in a same network. For example, the device 101 and the device 102 access a same Wi-Fi network (for example, a house-wide intelligent network), or access a same local area network (for example, a network deployed in a smart campus). For another example, both the device 101 and the device 102 establish connections to the device 103.

Optionally, the device 101 or the device 102 may also have a function of the device 103.

Optionally, the device 101 may have a camera function.

Optionally, the device 102 may be configured with a screen.

Optionally, operating systems such as Harmony (Harmony) systems are deployed on the device 101 and the device 102. The system may also be deployed on the device 103. In some embodiments, the operating system may also be an Android system or another operating system.

It may be understood that product forms of the device 101 to the device 103 are not limited in this application. The device 101, the device 102, or the device 103 may be a handheld device, a vehicle-mounted device, a wearable device, a compute device, or the like. For example, the device 101 may be a mobile phone (mobile phone), a tablet computer, a notebook computer, a palmtop computer, a mobile internet device (mobile internet device, MID), a satellite terminal, a desktop computer, a smart screen, a smart robot, a terminal in industrial control, a terminal in self-driving, a terminal in telemedicine, a terminal in smart grid (smart grid), a terminal in transportation security, a terminal in smart city (smart city), a terminal in smart home (smart home), a vehicle-mounted terminal, a smartwatch, or the like. The device 102 may be a mobile phone, a tablet computer, a notebook computer, a palmtop computer, an MID, a satellite terminal, a camera device, a smart robot, a terminal in industrial control, a terminal in self-driving, a terminal in telemedicine, a terminal in smart grid, a terminal in transportation security, a terminal in smart city, a terminal in smart home, a vehicle-mounted terminal, a smartwatch, or the like. The device 103 may be a house-wide intelligent host, a router, a central control screen, a mobile phone, a tablet computer, a notebook computer, a desktop computer, a switch, a modem (modem), a smart robot, or the like.

The communication system 10 shown in FIG. 1 is merely used as an example, but is not intended to limit the technical solutions of this application. A person skilled in the art should understand that, in a specific implementation process, the communication system 10 may further include another device, for example, a screened device other than the device 101, and/or a camera device other than the device 102.

Optionally, each device (for example, the device 101, the device 102, or the device 103) in FIG. 1 of this application may also be referred to as an electronic device, and may be a general-purpose device or a dedicated device. This is not specifically limited in this application.

Optionally, related functions of each device (for example, the device 101, the device 102, or the device 103) in FIG. 1 in this application may be implemented by one device, or may be jointly implemented by a plurality of devices, or may be implemented by one or more functional modules in one device. This is not specifically limited in this application. It can be understood that the foregoing function may be a network element in a hardware device, or may be a software function running on dedicated hardware, or a combination of hardware and software, or an instantiated virtualized function on a platform (for example, a cloud platform).

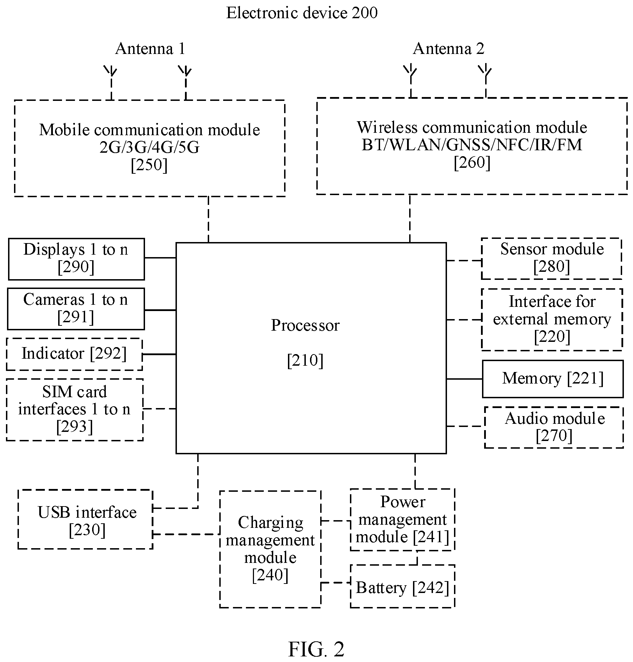

In a specific implementation, each device (for example, the device 101, the device 102, or the device 103) in FIG. 1 in this application may use a composition structure shown in FIG. 2, or include components shown in FIG. 2. FIG. 2 is a diagram of a hardware structure of an electronic device to which this application is applicable. The electronic device 200 includes a processor 210 and a memory 221. If the electronic device 200 is the device 101 in FIG. 1, the electronic device 200 further includes a display 290. If the electronic device 200 is the device 102 in FIG. 1, the electronic device 200 further includes a camera 291. Optionally, the electronic device 200 further includes at least one of the following: an interface for external memory 220, a universal serial bus (universal serial bus, USB) interface 230, a charging management module 240, a power management module 241, a battery 242, an antenna 1, an antenna 2, a mobile communication module 250, a wireless communication module 260, an audio module 270, a sensor module 280, an indicator 292, a subscriber identification module (subscriber identification module, SIM) card interface 293, or the like. Details are described below.

The processor 210 may include one or more processing units. For example, the processor 210 may include one or more of the following: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and the like. Different processing units may be independent components, or may be integrated into one or more processors. The controller may generate an operation control signal based on an instruction operation code and a time sequence signal, to complete control of instruction reading and instruction execution.

Optionally, a memory configured to store instructions and data may be further disposed in the processor 210. In some embodiments, the memory in the processor 210 is a cache memory. The memory may store instructions or data just used or cyclically used by the processor 210. If the processor 210 needs to use the instructions or the data again, the processor may directly invoke the instructions or the data from the memory. This avoids repeated access and reduces waiting time of the processor 210, thereby improving system efficiency.

In some embodiments, the processor 210 may include one or more interfaces. The interface may include one or more of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and the like.

The charging management module 240 is configured to receive charging input from a charger. The charger may be a wireless charger or a wired charger.

The power management module 241 is configured to connect to the battery 242, the charging management module 240, and the processor 210. The power management module 241 receives input from the battery 242 and/or the charging management module 240, and supplies power to the processor 210, the memory 221, the display 290, the camera 291, the wireless communication module 260, and the like.

A wireless communication function of the electronic device 200 may be implemented through the antenna 1, the antenna 2, the mobile communication module 250, the wireless communication module 260, the modem processor, the baseband processor, and the like. The antenna 1 and the antenna 2 are configured to transmit and receive electromagnetic wave signals. Each antenna in the electronic device 200 may be configured to cover one or more communication frequency bands. Different antennas may be further multiplexed, to improve antenna utilization. The mobile communication module 250 may provide a solution applied to the electronic device 200 for wireless communication including 2G/3G/4G/5G and the like. The wireless communication module 260 may provide a solution applied to the electronic device 200 for wireless communication including a wireless local area network (wireless local area network, WLAN) (for example, a Wi-Fi network), Bluetooth, a global navigation satellite system (global navigation satellite system, GNSS), frequency modulation (frequency modulation, FM), near field communication (near field communication, NFC), an infrared (infrared, IR) technology, and the like.

The electronic device 200 implements a display function by using the GPU, the display 290, the application processor, and the like. The GPU is an image processing microprocessor and is connected to the display 290 and the application processor. The GPU is configured to perform mathematical and geometric calculation for graphics rendering. The processor 210 may include one or more GPUs that execute program instructions to generate or change displayed information.

The display 290 is configured to display an image, a video, and the like. The display 290 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a Miniled, a MicroLed, a Micro-oLed, a quantum dot light-emitting diode (quantum dot light-emitting diode, QLED), or the like. In some embodiments, the electronic device 200 may include 1 or n displays 290, where n is a positive integer greater than 1.

The electronic device 200 may implement a camera function by using the ISP, the camera 291, the video codec, the GPU, the display 290, the application processor, and the like.

The ISP is configured to process feedback data from the camera 291. For example, during capture, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and color temperature of a captured scene. In some embodiments, the ISP may be disposed in the camera 291.

The camera 291 is configured to capture a static image or video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 200 may include 1 or n cameras 291, where n is a positive integer greater than 1.

The digital signal processor is configured to process a digital signal, and may process another digital signal in addition to the digital image signal. For example, when the electronic device 200 selects a frequency, the digital signal processor is configured to perform Fourier transform on frequency energy and the like.

The interface for external memory 220 may be configured to connect to an external memory card, like a Micro SD card, to expand a storage capability of the electronic device 200. The external memory card communicates with the processor 210 through the interface for external memory 220, to implement a data storage function. For example, files such as music and videos are stored in the external memory card.

The memory 221 may be configured to store computer-executable program code, where the executable program code includes instructions. The memory 221 may include a program storage area and a data storage area. The program storage area may store an operating system, an application required by at least one function (like a voice playback function and an image playback function), and the like. The data storage area may store data (for example, audio data or a phone book) created during use of the electronic device 200, and the like. In addition, the memory 221 may include a high-speed random access memory, and may further include a non-volatile memory, for example, at least one magnetic disk storage device, a flash memory, or a universal flash storage (universal flash storage, UFS). The processor 210 runs the instructions stored in the memory 221 and/or the instructions stored in the memory disposed in the processor, to implement various functional applications and data processing of the electronic device 200.

The electronic device 200 may implement an audio function by using the audio module 270, the application processor, and the like, for example, implement a music playback function or a recording function. The audio module 270 includes a speaker, a receiver, a microphone, a headset jack, and the like.

The sensor module 280 may include one or more sensors, configured to implement a corresponding function. For example, the sensor module 280 includes at least one of the following: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The indicator 292 may be an indicator light, and may be configured to indicate a charging status and a battery change, or indicate a message, a missed call, a notification, and the like.

The SIM card interface 293 is configured to be connected to a SIM card. The SIM card may be inserted into the SIM card interface 293 or removed from the SIM card interface 293, to be in contact with and be separated from the electronic device 200. The electronic device 200 supports 1 or n SIM card interfaces, where n is a positive integer greater than 1. The SIM card interface 293 supports a nano-SIM card, a micro-SIM card, a SIM card, and the like. Optionally, some electronic devices provided with eSIM functions may not include the SIM card interfaces 293.

It may be understood that the structure shown in this application does not constitute a specific limitation on the electronic device 200. In some other embodiments of this application, the electronic device 200 may include more or fewer components than those shown in the figure, some components may be combined, some components may be split, or different arrangements may be used. The components shown in the figure may be implemented by hardware, software, or a combination of software and hardware.

The following describes the method provided in this application with reference to the accompanying drawings. Devices in the following embodiments may have components shown in FIG. 2. Details are not described again.

It may be understood that, in this application, "/" may indicate an "or" relationship between associated objects. For example, A/B may indicate A or B. "And/or" may be used to describe three relationships between associated objects. For example, A and/or B may indicate three cases: Only A exists, both A and B exist, and only B exists. A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of the technical solutions of this application, in this application, the terms "first", "second", and the like may be used to distinguish between technical features with a same function or similar functions. The terms such as "first" and "second" do not limit a quantity and an execution sequence, and the terms such as "first" and "second" do not limit a definite difference. In this application, terms such as "example" or "for example" are used to represent giving an example, an illustration, or a description. Any embodiment or design scheme described with "example" or "for example" should not be explained as being more preferred or having more advantages than another embodiment or design scheme. The term like "example" or "for example" is used to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that in embodiments of this application, sequence numbers of processes do not mean a sequence of execution. The sequence of execution of the processes should be determined according to functions and internal logic of the processes, and should not constitute any limitation on an implementation process of this application.

It may be understood that, in this application, "when", "in a case in which", "if", and "it is assumed that" mean that corresponding processing is performed in an objective situation, are not intended to limit time, do not require a necessary determining action during implementation, and do not mean any other limitation.

"Simultaneously" in this application may be understood as being at a same time point, may be understood as being in a time period, or may be understood as being in a same periodicity.

In this application, "a plurality of" may be understood as two or more. For example, a plurality of signals may be understood as two or more signals.

In this application, "greater than or equal to" may be replaced with "greater than" or "equal to"; and "less than or equal to" may be replaced with "less than" or "equal to". For example, that A is greater than or equal to B may be replaced with that A is greater than B, or A is equal to B. That A is less than or equal to B may be replaced with that A is less than B, or A is equal to B.

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, an apparatus provided in this application may also correspondingly implement these features or functions. Details are not described herein.

It may be understood that, in this application, a same step, or steps or technical features that have a same function may be mutually referenced between different embodiments.

The following uses an example in which the device 101 and the device 102 in FIG. 1 are used as execution entities of illustrative interaction to illustrate the short-range communication method provided in this application. However, the execution entities of the illustrative interaction are not limited in this application. For example, a device (for example, the device 101 or the device 102) in a method provided in the following embodiments of this application may be a chip, a chip system, or a processor that supports the device in implementing the method, or may be a logical node, a logical module, or software that can implement all or some device functions.

It may be understood that, in this application, the device 101 and/or the device 102 may perform some or all steps in this application. These steps are merely examples. In this application, other steps or variations of various steps may alternatively be performed. In addition, the steps may be performed in a sequence different from that presented in this application, and not all the steps in this application may be performed.

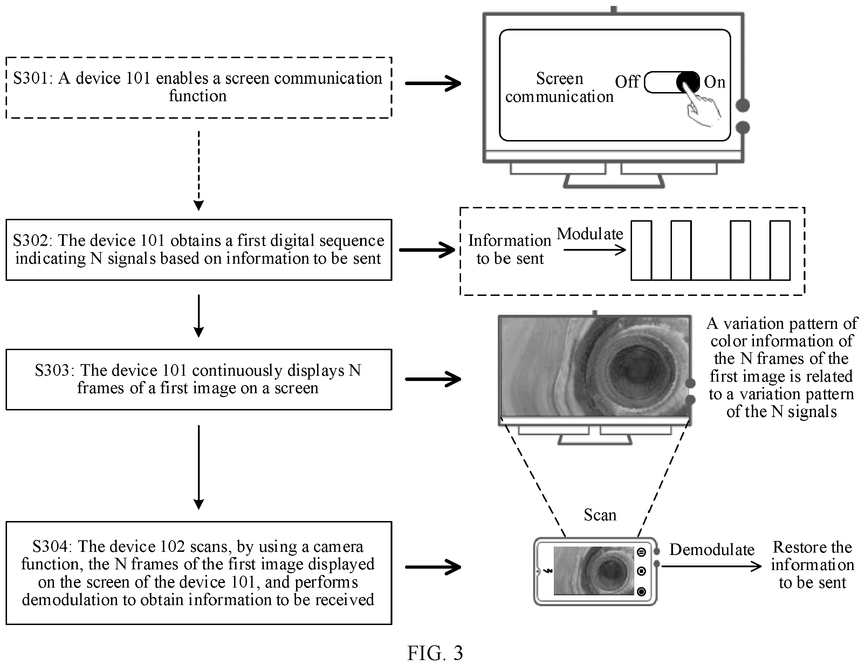

FIG. 3 shows a short-range communication method according to this application. The method may include the following steps.

S301: A device 101 enables a screen communication function.

In this application, the screen communication function may fuse information to be sent and a plurality of frames of images displayed on a screen, so that a device (for example, a device 102) with a camera function can scan and demodulate the images to restore the information to be sent, so that the information to be sent is "sent" to the device with the camera function. In this application, "scan" may be replaced with "capture", "record", or the like. This is not limited.

In a possible implementation, the device 101 may enable the screen communication function in response to an operation of a user. For example, the user triggers the device 101 to enable the screen communication function through operations such as pressing a button, tapping, using a gesture, or performing voice control.

In another possible implementation, the device 101 enables the screen communication function based on a received indication. For example, the device 102 or a device 103 sends first indication information to the device 101. The first indication information indicates to enable the screen communication function. After receiving the first indication information, the device 101 enables the screen communication function. It may be understood that if the device 102 and the device 101 are in a same network, the device 102 may broadcast the first indication information to a device in the network; or if the device 102 and the device 101 access a network through the device 103, the device 102 may forward the first indication information to the device 101 through the device 103.

It may be understood that S301 is an optional step. For example, if the screen communication function is in an enabled state when the device 101 is delivered from a factory, the device 101 may not perform S301. For another example, if the user has set the screen communication function of the device 101 to the enabled state, the device 101 may not perform S301.

S302: The device 101 obtains a first digital sequence based on the information to be sent.

In this application, the information to be sent is information to be transmitted by the device 101 to a device (for example, the device 102) other than the device 101. For example, the information to be sent includes but is not limited to one or more of a password (like a personal identification number (personal identification number, PIN) code), a two-dimensional code, a bar code, information about the device 101 (like an identifier or a version of the device 101), a website, or other information. The information to be sent may be generated by the device 101 (for example, a two-dimensional code, a bar code, or a PIN code generated by the device 101), locally stored (for example, information about the device 101), or obtained from another device (for example, the device 103 generates a PIN code for the device 101 and sends the PIN code to the device 101, or the device 101 obtains information such as a website address from a third-party application server).

In a possible implementation, the device 101 modulates the information to be sent at a first bandwidth and a first frequency to obtain the first digital sequence. The first digital sequence may indicate N signals, and N is an integer greater than 1. For example, the device 101 may perform digital baseband modulation on the information to be sent to obtain a first bit sequence, and perform phase modulation on the first bit sequence at the first bandwidth and the first frequency to obtain the first digital sequence. The digital baseband modulation is, for example, non-return to zero (non-return to zero, NRZ) modulation, differential code modulation, or return to zero code modulation. The phase modulation is, for example, binary phase shift keying (binary phase shift keying, BPSK), differential binary phase shift keying (differential BPSK, DBPSK), or quadrature phase shift keying (quadrature phase shift keying, QPSK). This is not limited. The first bandwidth is a modulation bandwidth of the first digital sequence. For example, the first bandwidth is [20 Hz, 40 Hz]. The first frequency is a modulation frequency of the first digital sequence. For example, the first frequency is 30 Hz. In addition, in this application, the "signal" may be replaced with a "chip" or the like. This is not limited. The device 101 may also perform amplitude modulation on the first bit sequence to obtain the first digital sequence. The following embodiments of this application are described by using the phase modulation as an example.

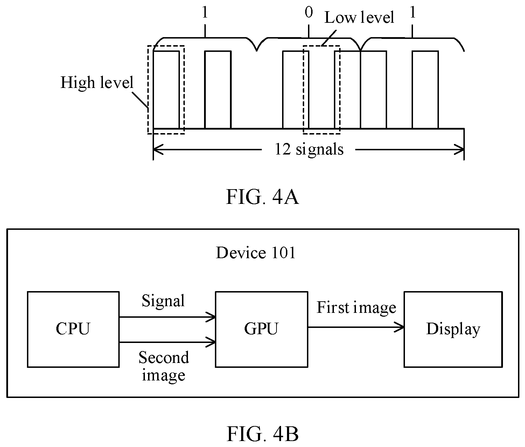

For example, the first bit sequence is "101", N is equal to 12, and a modulation scheme is BPSK. The first digital sequence may be shown in FIG. 4A. In FIG. 4A, a signal is represented in a form of a high level or a low level. The first bit sequence includes three bits, each bit corresponds to four signals, and one bit value corresponds to four carrier periodicities. For example, "1" may be represented by four signals in a "high level-low level-high level-low level" form, and "0" may be represented by four signals in a "low level-high level-low level-high level" form. It should be understood that FIG. 4A is merely an example of the first digital sequence. In specific application, the first digital sequence may be alternatively represented in another form, or the first digital sequence may include more or fewer signals than those shown in FIG. 4A. This is not limited.

It may be understood that during phase modulation, a modulation frequency is usually not greater than half of a current refresh rate of a screen. Therefore, the first frequency is less than or equal to half of the screen refresh rate of the device 101. A higher modulation frequency indicates information, that is more "transparent" to the user, about the N signals fused with N frames of the first image. Therefore, if the first frequency is equal to half of the screen refresh rate of the device 101, the user can have weakest perception of the N signals fused with the N frames of the first image. If the first frequency is less than the screen refresh rate of the device 101, computational power of the device 101 can be reduced, and power consumption can be reduced. In this application, units of the screen refresh rate and the following capture frame rate (for example, a first capture frame rate) may be frames per second (FPS).

S303: The device 101 continuously displays the N frames of the first image on the screen.

In this application, the N frames of the first image correspond to N consecutive frames of the second image. For example, an i^{th} frame of the first image corresponds to an i^{th} frame of the second image, and i is an integer greater than 1 and less than or equal to N. The N frames of the second image are the content displayed on the screen of the device 101 when the screen communication function is not enabled. A visual perception result of the N frames of the first image by a user is the same as a visual perception result of the N frames of the second image by the user. In other words, for the user, the i^{th} frame of the second image is the same as the i^{th} frame of the first image. In this way, use of the device 101 by the user is not affected.

It may be understood that, when two different colors flicker alternately, but a luminance change is not great, and a flickering frequency is greater than a specific value, human eyes perceive a fused color, and cannot perceive color flickering. According to this principle, a constraint condition may be designed for the first images, so that the visual perception result of the user on the N frames of the first image is the same as the visual perception result of the user on the N frames of the second image.

In a possible design, the screen refresh rate of the device 101 is greater than or equal to a first threshold; an absolute value of a difference between a luminance of a first pixel in the i^{th} frame of the first image and a luminance of the first pixel in the i^{th} frame of the second image is less than or equal to a second threshold, and an absolute value of a difference between first color information and second color information is less than or equal to a third threshold. At the first threshold, screen flickering is imperceptible to the user. For example, the first threshold is 15 Hz, 16 Hz, or 20 Hz. The first pixel is any pixel on the screen of the device 101. The first color information is color information of the first pixel in M consecutive frames of the first image among the N frames of the first image, the second color information is color information of the first pixel in M frames of the second image corresponding to the M frames of the first image, and M is an integer greater than 1 and less than or equal to N. For example, M is equal to a carrier periodicity (for example, two frames) of the first digital sequence. At the second threshold and the third threshold, a visual perception effect of the i^{th} frame of the second image by the user is the same as a visual perception effect of the i^{th} frame of the first image by the user.

In addition, to enable the device 101 to "send" the information to be sent, the N frames of the first image may carry the information about the N signals.

In a possible design, a variation pattern of color information of the N frames of the first image is related to a variation pattern of the N signals For example, within the first bandwidth, the variation pattern of the color information of the N frames of the first image is related to the variation pattern of the N signals in the frequency domain, and/or the variation pattern of the color information of the N frames of the first image is related to the variation pattern of the N signals in the time domain. In some embodiments, the variation pattern of the color information of the N frames of the first image maintains a same or a similar change trend as the variation pattern of the N signals in the frequency domain, or the variation pattern of the color information of the N frames of the first image is the same as the variation pattern of the N signals in the frequency domain. In some embodiments, the variation pattern of the color information of the N frames of the first image is linearly correlated with the variation pattern of the N signals in the time domain, and the variation pattern of the color information of the N frames of the first image is in a coefficient relationship with the variation pattern of the N signals in the time domain. Such a coefficient may be a positive number or a negative number. In this way, the information about the N signals may be fused with the color information of the N frames of the first image, so that the device 102 can restore the information to be sent by scanning and demodulating the first images. Color information of the i^{th} frame of the first image indicates an accumulated color value of pixels in the i^{th} frame of the first image or an average color value of a pixel in the i^{th} frame of the first image. For example, the color information of the i^{th} frame of the first image is a sum of color values of all or some pixels in the i^{th} frame of the first image, or is a sum, of color values of all or some pixels in the i^{th} frame of the first image, divided by a quantity of pixels in the i^{th} frame that participate in the "sum" operation.

Optionally, a variation pattern of luminance information of the N frames of the first image is related to the variation pattern of the N signals. For example, within the first bandwidth, the variation pattern of the luminance information of the N frames of the first image is related to the variation pattern of the N signals in the frequency domain, and/or the variation pattern of the luminance information of the N frames of the first image is related to the variation pattern of the N signals in the time domain. In some embodiments, the variation pattern of the luminance information of the N frames of the first image maintains a same or a similar change trend as the variation pattern of the N signals in the frequency domain, or the variation pattern of the luminance information of the N frames of the first image is the same as the variation pattern of the N signals in the frequency domain. In some embodiments, the variation pattern of the luminance information of the N frames of the first image is linearly correlated with the variation pattern of the N signals in the time domain, and the variation pattern of the luminance information of the N frames of the first image is in a coefficient relationship with the variation pattern of the N signals in the time domain. Such a coefficient may be a positive number or a negative number. In this way, the information about the N signals may be fused with the color information of the N frames of the first image, or may be fused with the luminance information of the N frames of first image. Luminance information of the i^{th} frame of the first image indicates an accumulated luminance value of pixels in the i^{th} frame of the first image or an average luminance value of a pixel in the i^{th} frame of the first image.

It can be learned from the foregoing descriptions that the i^{th} frame of the first image is essentially obtained by fusing the i^{th} signal with the i^{th} frame of the second image. For example, the device 101 may obtain the N frames of the second image, fusing the N signals with the N frames of the second image respectively, and continuously display the N frames of the first image on the screen of the device 101. It may be understood that the fusing operation of the signal and the second image may be performed by a CPU of the device 101, or may be performed by a GPU of the device 101, or may be performed by both the CPU and the GPU of the device 101. For example, the fusing operation is performed by the GPU. In FIG. 4B, the CPU of the device 101 obtains the signal and the second image, and inputs the signal and the second image to the GPU, so that the GPU fuses the signal and the second image, and inputs the fused first image to a display.

Constraints of the first image are described below by using an example in which N and M are equal to 2, where a 1^{st} signal is in a high level and is represented by ${w}_{α}^{1}$, a 2^{nd} signal is in a low level and is represented by ${w}_{α}^{2}$, a red green blue (red green blue, RGB) value of a 1^{st} frame of the second image is represented by ${w}_{β 1}^{1}$, an RGB value of a 2^{nd} frame of the second image is represented by ${w}_{β 1}^{2}$, an RGB value of a 1^{st} frame of the first image is represented by ${w}_{γ 1}^{1}$*,* an RGB value of a 2^{nd} frame of the first image is represented by ${w}_{γ 1}^{2}$, an LAB value of the 1^{st} frame of the second image is represented by ${w}_{β 2}^{1}$*,* an LAB value of the 2^{nd} frame of the second image is represented by ${w}_{β 2}^{2}$*,* an LAB value of the 1^{st} frame of the first image is represented by ${w}_{γ 2}^{1}$*,* and an LAB value of the 2^{nd} frame of the first image is represented by ${w}_{γ 2}^{2}$.

Here, ${w}_{β 1}^{i}$ and ${w}_{γ 1}^{i}$ are spatial matrices in RGB space, and there are (H*W*Y) dimensions in total. *i* is equal to 1 or 2, H indicates a screen height of the device 101, W indicates a screen width of the device 101, and Y is equal to 3, corresponding to R, G, and B, respectively. H is an actual height of the screen or a downsampled height. Similarly, W is an actual width of the screen or a downsampled width. ${w}_{β 1}^{i}$ may be represented as $\left[{R}_{β 1 \left(k, l\right)}^{i}, {G}_{β 1 \left(k, l\right)}^{i}, {B}_{β 1 \left(k, l\right)}^{i}\right]$*,* and ${w}_{γ 1}^{i}$ may be represented as $\left[{R}_{γ 1 \left(k, l\right)}^{i}, {G}_{γ 1 \left(k, l\right)}^{i}, {B}_{γ 1 \left(k, l\right)}^{i}\right]$*.* In this case, ${w}_{α}^{i}$ may also be regarded as a spatial matrix, and there are a total of (H*W*Y) dimensions. ${w}_{α}^{i}$ may be represented as $\left[{R}_{α \left(k, l\right)}^{i}, {G}_{α \left(k, l\right)}^{i}, {B}_{α \left(k, l\right)}^{i}\right]$; in other words, ${w}_{α}^{i}$ may be regarded as a communication layer. ${w}_{β 2}^{i}$ and ${w}_{γ 2}^{i}$ are spatial matrices of color space specified by the International Commission on Illumination (CIE) L*A*B (CIELAB) (referred to as CIELAB space for short). There are a total of (H*W*Z) dimensions, where Z is equal to 3, corresponding to lightness (lightness, L), A, and B, respectively. A indicates a component ranging from green to red in the CIELAB space, and B indicates a component ranging from blue to yellow in the CIELAB space. It should be understood that the meaning of B (indicating blue) in the RGB space is different from the meaning of B (indicating the component ranging from blue to yellow in the CIELAB space) in the CIELAB space. ${w}_{β 2}^{i}$ may be represented as $\left[{L}_{β 2 \left(k, l\right)}^{i}, {A}_{β 2 \left(k, l\right)}^{i}, {B}_{β 2 \left(k, l\right)}^{i}\right]$, and ${w}_{γ 2}^{i}$ may be represented as $\left[{L}_{γ 2 \left(k, l\right)}^{i}, {A}_{γ 2 \left(k, l\right)}^{i}, {B}_{γ 2 \left(k, l\right)}^{i}\right]$. (*k, l*) is a pixel on the screen of the device 101.

Example 1: The device 101 converts ${w}_{β 1}^{i}$ from the RGB space into the CIELAB space to obtain ${w}_{β 2}^{i}$, and modulates ${w}_{α}^{i}$ by changing values of ${A}_{β 2 \left(k, l\right)}^{i}$ and ${B}_{β 2 \left(k, l\right)}^{i}$ in ${w}_{β 2}^{i}$*,* so that the variation pattern of the color information of the N frames of the first image is related to the variation pattern of the N signals. For example, the screen refresh rate of the device 101 is greater than or equal to the first threshold, and ${w}_{α}^{i} , {w}_{β 1}^{i} , {w}_{γ 1}^{i} , {w}_{β 2}^{i}$*,* and ${w}_{γ 2}^{i}$ satisfy the following relationships (1) to (4), so that the visual perception result of the N frames of the first image by a user is the same as the visual perception result of the N frames of the second image by the user, and the variation pattern of the color information of the N frames of the first image is related to the variation pattern of the N signals.$\left|{L}_{γ 2 \left(k, l\right)}^{i}-{L}_{β 2 \left(k, l\right)}^{i}\right| \leq {L}_{max} ,$ where *L*ₘₐₓ represents the second threshold. For example, ${L}_{γ 2 \left(k, l\right)}^{1} = {L}_{β 2 \left(k, l\right)}^{1}$, and ${L}_{γ 2 \left(k, l\right)}^{2} = {L}_{β 2 \left(k, l\right)}^{2}$*.*$\left|\left({A}_{γ 2 \left(k, l\right)}^{1}+{A}_{γ 2 \left(k, l\right)}^{2}\right)-\left({A}_{β 2 \left(k, l\right)}^{1}+{A}_{β 2 \left(k, l\right)}^{2}\right)\right| \leq {A}_{max} ,$ where *A*ₘₐₓ represents the third threshold, and $\left|\left({B}_{γ 2 \left(k, l\right)}^{1}+{B}_{γ 2 \left(k, l\right)}^{2}\right)-\left({B}_{β 2 \left(k, l\right)}^{1}+{B}_{β 2 \left(k, l\right)}^{2}\right)\right| \leq {B}_{max} ,$*,* where *B*ₘₐₓ represents the third threshold. *A*ₘₐₓ and *B*ₘₐₓ may be the same or different.${w}_{γ 1}^{i} = {w}_{β 1}^{i} + {w}_{α}^{i} .$

(4) It is ensured that a first image (the 1^{st} frame of the first image in this example) corresponding to the high level is different from a first image (the 2^{nd} frame of the first image in this example) corresponding to the low level, so that the device 102 can restore the information to be sent. For example, it is assumed that ${\sum }_{\left(k, l\right)} {R}_{α \left(k, l\right)}^{1} = CONS 1 , {\sum }_{\left(k, l\right)} {G}_{α \left(k, l\right)}^{1} = CONS 2 , {\sum }_{\left(k, l\right)} {B}_{α \left(k, l\right)}^{1} = CONS 3 , {\sum }_{\left(k, l\right)} {R}_{α \left(k, l\right)}^{2} = CONS 4 ,$*,* ${\sum }_{\left(k, l\right)} {G}_{α \left(k, l\right)}^{2} = CONS 5$*,* and ${\sum }_{\left(k, l\right)} {B}_{α \left(k, l\right)}^{2} = CONS 6$*.* Here, *CONS*1, *CONS*2, *CONS*3, *CONS*4, *CONS*5, *and CONS*6 are constants, *CONS*1, *CONS*2, and *CONS*3 may be the same or different, and *CONS*4, *CONS5, and CONS*6 may be the same or different, but *CONS*1 *and CONS*4 are different, *CONS2 and CONS5* are different, and *CONS*3 *and CONS*6 are different. It may be understood that color information of the 1^{st} frame of the first image may be represented as [*CONS*1, *CONS*2, *CONS*3], and color information of the 2^{nd} frame of the first image may be represented as [*CONS*4, *CONS*5, *CONS*6] *.*

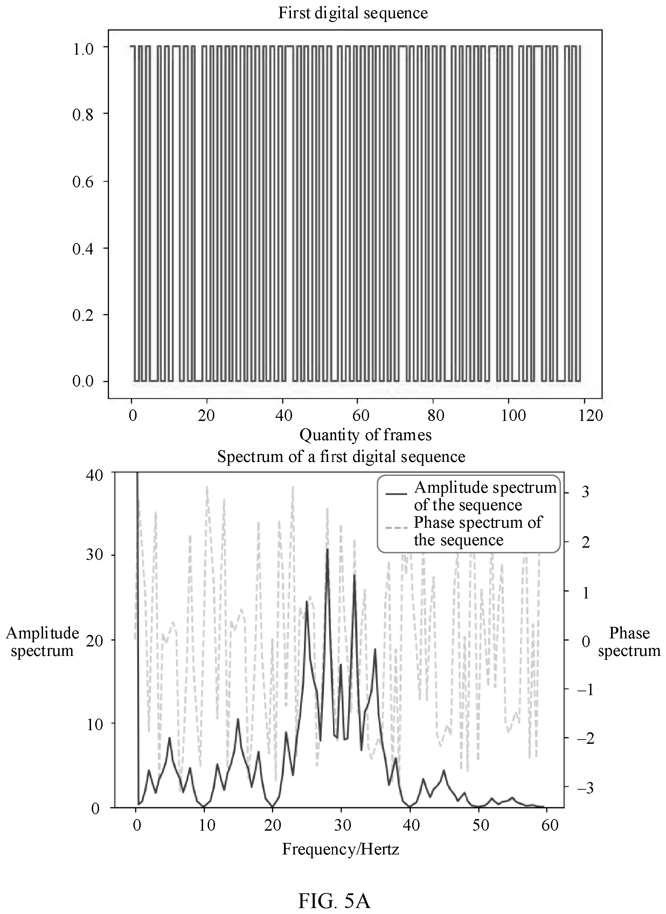

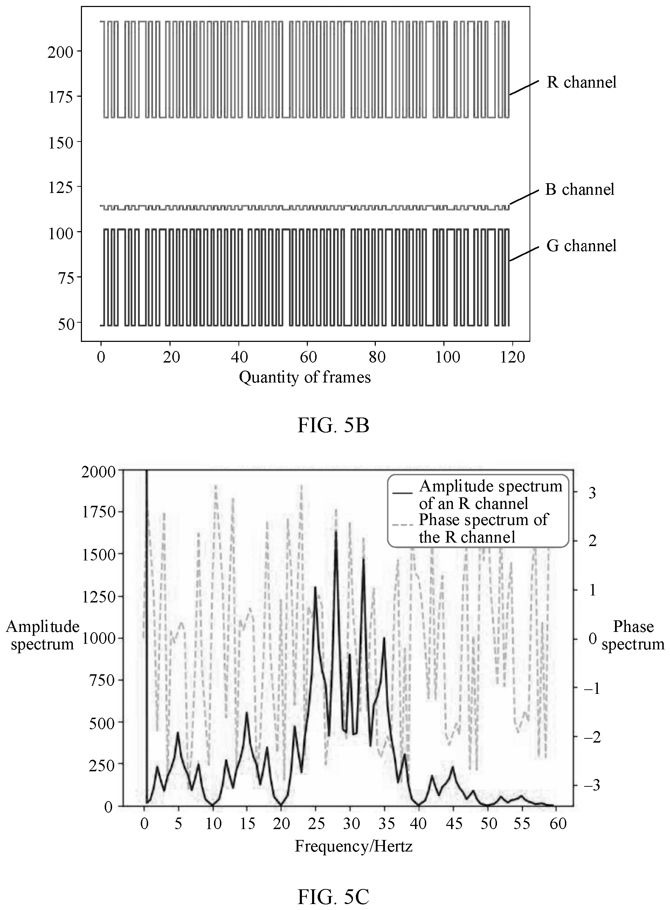

Using the first digital sequence shown in FIG. 5A as an example, the first digital sequence indicates 120 signals, the first frequency is 30 Hz, the first bandwidth is 20 Hz to 40 Hz, and RGB values of 120 frames of the second image remain unchanged or change little. In one case, a variation pattern of an R channel of 120 frames of the first image in the time domain, a variation pattern of a G channel of 120 frames of the first image in the time domain, and a variation pattern of a B channel of 120 frames of the first image in the time domain are separately related to a variation pattern of the 120 signals, specifically as shown in FIG. 5B. In another case, within a bandwidth from 20 Hz to 40 Hz, a variation pattern of the R channel of the 120 frames of the first image in the frequency domain is related to the variation pattern of 120 signals, specifically as shown in FIG. 5C. It may be understood that a variation pattern of the G channel or the B channel of the 120 frames of the first image in the frequency domain is similar to that of the R channel, and is related to the variation pattern of the 120 signals. Details are not described again. It should be understood that, although the R channel, the G channel, and the B channel all carry luminance information and color information, because $\left|{L}_{γ 2 \left(k, l\right)}^{i}-{L}_{β 2 \left(k, l\right)}^{i}\right| \leq {L}_{max}$, it may be understood as that the foregoing variation pattern is a variation pattern of the color information and has little relationship with the luminance information.

Optionally, in Example 1, the N frames of the second image (or the N frames of the first image) are quasi-static images. The foregoing relationships (1) and (2) may be changed into the following relationships.${L}_{γ 2 \left(k, l\right)}^{1} = {L}_{γ 2 \left(k, l\right)}^{2} = {L}_{β 2 \left(k, l\right)}^{1} = {L}_{β 2 \left(k, l\right)}^{2} .$$\left({A}_{γ 2 \left(k, l\right)}^{1}+{A}_{γ 2 \left(k, l\right)}^{2}\right) / M = {A}_{β 2 \left(k, l\right)}^{1} = {A}_{β 2 \left(k, l\right)}^{2} , and \left({B}_{γ 2 \left(k, l\right)}^{1}+{B}_{γ 2 \left(k, l\right)}^{2}\right) / M = {B}_{β 2 \left(k, l\right)}^{1} = {B}_{β 2 \left(k, l\right)}^{2} .$ In this example, M is equal to 2.

Example 2: The device 101 does not perform conversion from the RGB space to the CIELAB space, but directly modulates ${w}_{β 1}^{i}$ according to a variation pattern of the high level and the low level of the first digital sequence, for example, by changing values of ${R}_{β 1 \left(k, l\right)}^{i}$, and/or ${G}_{β 1 \left(k, l\right)}^{i}$, and/or ${B}_{β 1 \left(k, l\right)}^{i}$ in ${w}_{β 1}^{i}$ (for example, adding △*R* to ${R}_{β 1 \left(k, l\right)}^{i}$, adding △*G* to ${G}_{β 1 \left(k, l\right)}^{i}$*,* and adding △*B* to ${B}_{β 1 \left(k, l\right)}^{i}$), so that the variation patterns of the color information and the luminance information of the N frames of the first image are consistent with the variation pattern of the N signals. Here, △*R* is a positive number, a negative number, or zero; △*G* is a positive number, a negative number, or zero; △*B* is a positive number, a negative number, or zero; and △*R*, △*G,* and △*B* are the same or different. It may be understood that, to enable the visual perception result of the N frames of the first image by a user to be the same as the visual perception result of the N frames of the second image by the user, the screen refresh rate of the device 101 is greater than or equal to the first threshold, and |△*R* + △*G* + △*B*| ≤ *T. T* is related to the second threshold and the third threshold. For example, T is determined to be 3 based on the second threshold and the third threshold. In addition, the device 101 needs to ensure that a first image (the 1^{st} frame of the first image in this example) corresponding to the high level is different from a first image (the 2^{nd} frame of the first image in this example) corresponding to the low level, so that the device 102 can restore the information to be sent. For example, it is assumed that ${\sum }_{\left(k, l\right)} {R}_{α \left(k, l\right)}^{1} = CONS 1 , {\sum }_{\left(k, l\right)} {G}_{α \left(k, l\right)}^{1} = CONS 2$*,* ${\sum }_{\left(k, l\right)} {B}_{α \left(k, l\right)}^{1} = CONS 3 , {\sum }_{\left(k, l\right)} {R}_{α \left(k, l\right)}^{2} = CONS 4 , {\sum }_{\left(k, l\right)} {G}_{α \left(k, l\right)}^{2} = CONS 5$, and ${\sum }_{\left(k, l\right)} {B}_{α \left(k, l\right)}^{2} = CONS 6$*.*

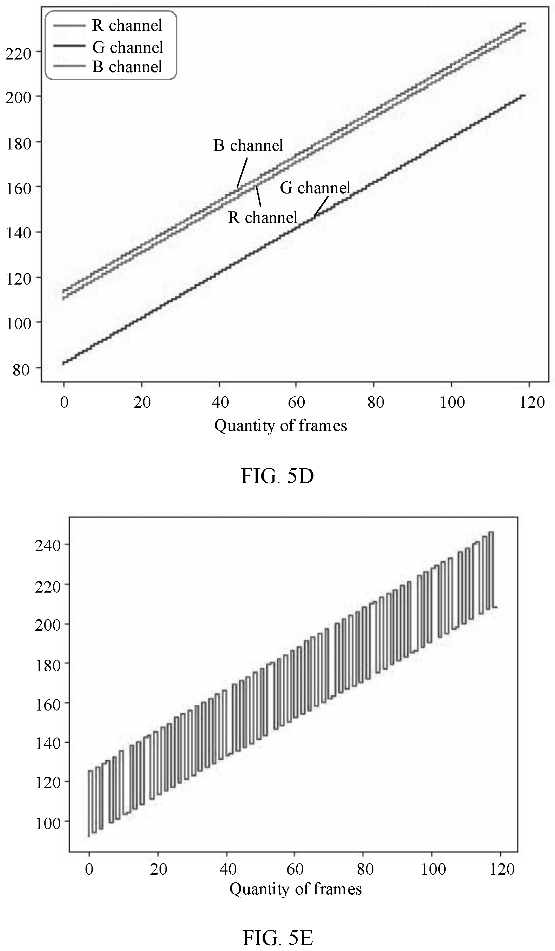

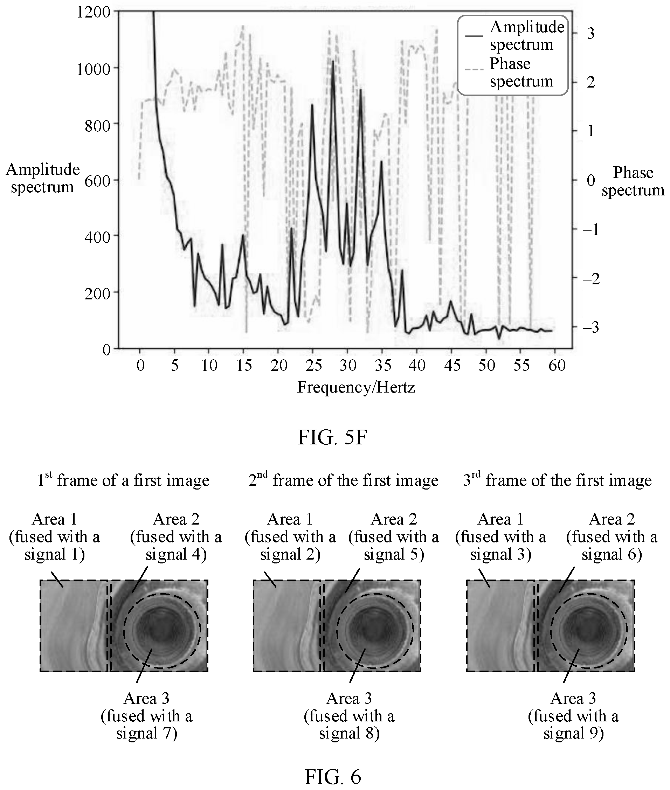

The first digital sequence shown in FIG. 5A and color information and luminance information of 120 frames of the second image shown in FIG. 5D are used as examples. The first digital sequence indicates 120 signals, the first frequency is 30 Hz, and the first bandwidth is 20 Hz to 40 Hz. In addition, an accumulated value (or an average value) of an R channel of the 120 frames of the second image, an accumulated value (or an average value) of a G channel of the 120 frames of the second image, and an accumulated value (or an average value) of a B channel of the 120 frames of the second image show an ascending trend. In one case, a variation pattern of an R channel of 120 frames of the first image in the time domain is related to a variation pattern of the 120 signals. Specifically, this can be as shown in FIG. 5E. It may be understood that a variation pattern of a G channel or a B channel of the 120 frames of the first image in the time domain is similar to that of the R channel, and is related to the variation pattern of the 120 signals. Details are not described again. In another case, within a bandwidth from 20 Hz to 40 Hz, a variation pattern of the R channel of the 120 frames of the first image in the frequency domain is related to the variation pattern of 120 signals. Specifically, this can be as shown in FIG. 5F. It may be understood that a variation pattern of the G channel or the B channel of the 120 frames of the first image in the frequency domain is similar to that of the R channel, and is related to the variation pattern of the 120 signals. Details are not described again. In addition, because the R channel, the G channel, and the B channel all carry luminance information and color information, it may be understood as that the foregoing a variation pattern is a variation pattern of the color information and the luminance information.

Optionally, in Example 2, the N frames of the second image (or the N frames of the first image) are images that dynamically change, for example, a video being played on the device 101.

It may be understood that the foregoing Example 1 and Example 2 are merely examples of the constraint condition of the first image. In specific application, the constraint condition of the first image may alternatively be in another form, and this is not limited.

Optionally, the device 101 may cyclically play the N frames of the first image.

S304: The device 102 scans, by using the camera function, the N frames of the first image displayed on the screen of the device 101, and performs demodulation to obtain the t information to be received.

In a possible implementation, the device 102 enables the camera function, scans, by using the camera function, the N frames of the first image displayed on the screen of the device 101 to obtain V frames of third images, and demodulates the V frames of third images to obtain the information to be received. V is an integer greater than 1. V is the same as or different from N. It may be understood that V is related to a capture frame rate of the device 102 and N. The information to be received is the information to be sent restored by the device 102.

For example, the device 102 enables the camera function in response to an operation of the user. For example, the user triggers the device 102 to enable the camera function through operations such as pressing a button, tapping, using a gesture, or performing voice control. The user may also set a parameter of the camera function. For example, the user triggers, by using a gesture or a voice corresponding to a communication mode, the device 102 to enable the camera function based on a parameter corresponding to the communication mode. The parameter of the camera function may include the capture frame rate. Optionally, the parameter further includes at least one of a focal length, ISO sensitivity, or exposure time. Optionally, the focal length may be set to a fixed value D to avoid a moiré pattern, and D is a focal length corresponding to slight underfocus or slight overfocus. For example, if a standard focal length is equal to 20 centimeters, D may be set to be less than 20 centimeters or greater than 20 centimeters. The exposure time may be far less than 1/*T_{P}*, where *T_{P}* is a sampling interval of the device 102. *T_{P}* is a reciprocal of the capture frame rate. Then, the device 102 guides the user (for example, guides the user by using text or a voice) to align a camera with the screen of the device 101, and scans the N frames of the first image to obtain the V frames of third images. For example, prompt information, for example, one or more of a captured image, a duration in which capture has been performed, whether to stop capturing, or whether a capturing angle is correct may be displayed on the screen of the device 102. When scanning duration is greater than or equal to preset duration, the device 102 performs digital signal processing and demodulation on the third images obtained through scanning, to restore the information to be sent. It may be understood that if the device 102 fails to restore the information to be sent, the user may be guided to rescan. The device 102 may further prompt the user with a failure cause, for example, excessively short scanning time or a severe shake.

It may be understood that the device 102 may obtain V signals by performing image processing on the V frames of third images. Because the variation pattern of the color information of the N frames of the first image is related to the variation pattern of the N signals, or the variation pattern of the color information and the luminance information of the N frames of the first image is related to the variation pattern of the N signals, and the V frames of third images are obtained by scanning the N frames of the first image, a variation pattern of the V signals is related to the variation pattern of the N signals. Therefore, the device 102 can restore the information to be sent by demodulating the V signals.

The actions of the device 101 or the device 102 in S301 to S304 may be performed by the processor 210 in the electronic device 20 shown in FIG. 2 by invoking application code stored in the memory 221. This is not limited in this application.

Based on the method shown in FIG. 3, the device 101 may modulate the information to be sent to the N frames of the first image displayed on the device 101. For the user, the information to be sent fused in the first image is "transparent", is imperceptible to the user, and does not affect use of the device 101 by the user. For the device 102, the information to be sent fused in the first image is not "transparent", and the device 102 may scan the N frames of the first image and perform demodulation to restore the information to be sent, so as to implement "communication" between the device 101 and the device 102. In addition, light directivity is good. Therefore, a device to be "communicated" may be selected by adjusting an orientation of the camera of the device 102, and the user does not need to manually search for the device. This operation is simple, is with good directivity, and can improve user experience.

Optionally, in a possible implementation of the method shown in FIG. 3, the first image may be divided into areas (for example, division into areas is performed based on color gamut distribution of the first image), and each area is fused with a different signal. In this way, the device 102 scans one frame of the first image and can obtain a plurality of signals through demodulation, and duration of scanning the first image by the device 102 can be shortened.

In a possible design, each frame of the first image includes P areas, positions and sizes of the P areas in any two frames of the first image are the same. The first digital sequence further indicates (P-1)*N signals, that is, the first digital sequence indicates P*N signals in total. The first digital sequence includes P sequences, each sequence indicates N consecutive signals among the P*N signals, the P areas correspond to the P sequences, and a variation pattern of color information of N frames in each area is related to a variation pattern of N consecutive signals corresponding to the area, and P is an integer greater than 1.

For example, P is equal to 3, and N is equal to 3. The first digital sequence includes nine signals, which are respectively a signal 1 to a signal 9. Correspondences between areas in three frames of the first image and a signal 1 to a signal 9 may be shown in FIG. 6. In FIG. 6, for a 1^{st} frame of the first image, an area 1 is fused with the signal 1, an area 2 is fused with the signal 4, and an area 3 is fused with the signal 7; for a 2^{nd} frame of the first image, an area 1 is fused with the signal 2, an area 2 is fused with the signal 5, and an area 3 is fused with the signal 8; and for a 3^{rd} frame of the first image, an area 1 is fused with the signal 3, an area 2 is fused with the signal 6, and an area 3 is fused with the signal 9. In other words, a variation pattern of color information of the three frames in the areas 1 is related to a variation pattern of the signal 1 to the signal 3, a variation pattern of color information of the three frames in the areas 2 is related to a variation pattern of the signal 4 to the signal 6, and a variation pattern of color information of the three frames in the areas 3 is related to a variation pattern of the signal 7 to the signal 9.

Optionally, a variation pattern of luminance information of N frames in each area is related to a variation pattern of N consecutive signals corresponding to the area. The first image shown in FIG. 6 is still used as an example. A variation pattern of luminance information of the three frames in the areas 1 is related to a variation pattern of the signal 1 to the signal 3, a variation pattern of luminance information of the three frames in the areas 2 is related to a variation pattern of the signal 4 to the signal 6, and a variation pattern of luminance information of the three frames in the areas 3 is related to a variation pattern of the signal 7 to the signal 9.

Optionally, different areas correspond to different fusing manners, to consider characteristics of the different areas and improve user experience. For example, if each frame of the first image includes two areas, an area 2 is a video window on a desktop of the device 101, and an area 1 is a part other than the video window on the desktop, the area 1 is fused with a signal in the manner in the foregoing Example 1, and the area 2 is fused with a signal in the manner in the foregoing Example 2. In this way, a playback speed of a dynamic image may be considered, so that the user does not sense video freeze. In addition, a modulation depth of a static image is considered, so that the first image seen by the user is closer to the second image.

Optionally, in a possible implementation of the method shown in FIG. 3, to help the device 102 determine the N frames of the first image from scanned images, the device 101 may fuse a synchronization sequence with R frames of the first image displayed on the screen, so that the device 102 determines the N frames of the first image based on the R frames of the first image.

In a possible implementation, the device 101 obtains the synchronization sequence, and continuously displays the R frames of the first image on the screen.

In this application, the synchronization sequence may indicate R signals, and R is an integer greater than 1. The synchronization sequence is modulated at a second frequency, and the second frequency is different from the first frequency. For example, the second frequency is less than the first frequency. The synchronization sequence may be pre-stored in the device 101, or the device 101 modulates synchronization information to obtain the synchronization sequence. For example, the device 101 modulates the synchronization information by using one to two carrier periodicity lengths of a carrier frequency *f_{c}* = 20Hz, to obtain the synchronization sequence. A process in which the device 101 modulates the synchronization information to obtain the synchronization sequence is similar to a process in which the device 101 modulates the information to be sent to obtain the first digital sequence. For details, refer to corresponding descriptions in S302. Details are not described herein again.

In this application, the R frames of the first image correspond to R consecutive frames of the second image, and the R frames of the second image are the content displayed on the screen of the device 101 when the screen communication function is not enabled on the device 101. A visual perception result of the R frames of the first image by a user is the same as a visual perception result of the R frames of the second image by the user. A variation pattern of color information of the R frames of the first image is related to a variation pattern of the R signals. Color information of a j^{th} frame of the first image indicates an accumulated color value of pixels in the j^{th} frame of the first image, and j is an integer greater than 1 and less than or equal to R. Relationships between the R frames of the first image, the R frames of the second image, and the R signals are similar to relationships between the N frames of the first image, the N frames of the second image, and the N signals. For details, refer to corresponding descriptions in S303. Details are not described herein again.

It may be understood that a time period in which the R frames of the first image are displayed on the screen of the device 101 is different from a time period in which the N frames of the first image are displayed on the screen of the first device. For example, the R frames of the first image are displayed before the N frames of the first image, and the 1^{st} frame of the first image among the N frames is displayed at an (R+1)^{th} frame. In this way, when scanning the R frames of the first image and the N frames of the first image, the device 102 may determine a position of the 1^{st} frame of the first image among the N frames based on the R frames of the first image, to determine the N frames of the first image. For another example, the R frames of the first image are displayed after the N frames of the first image, and a 1^{st} frame of the first image among the R frames is displayed at an (N+1)^{th} frame. In this way, when scanning the R frames of the first image and the N frames of the first image, the device 102 may determine a position of the N^{th} frame of the first image among the N frames based on the R frames of the first image, to determine the N frames of the first image.

It may be understood that, to resolve the phase ambiguity problem, the R signals may be configured to correspond to Z signals in the N signals, where Z is an integer greater than 1 and less than N. For example, the R signals correspond to first Z signals of the N signals, so that the device 102 determines, based on the R signals, bit values corresponding to the first N signals of the N signals.

It may be understood that, if the first image is divided into areas, synchronization sequences corresponding to different areas may be the same or different.

Optionally, in a possible implementation of the method shown in FIG. 3, the device 101 and the device 102 may access a same network, for example, a first network. The device 101 may obtain the first capture frame rate, and set the screen refresh rate of the device 101 based on the first capture frame rate, for example, set the screen refresh rate of the device 101 to be equal to the first capture frame rate. The first capture frame rate is a lowest capture frame rate in a capture frame rate supported by a device with the camera function in the first network. The capture frame rate supported by the device with the camera function in the first network may be a maximum capture frame rate, a minimum capture frame rate, a capture frame rate corresponding to a capture scenario, a commonly used capture frame rate, or the like that is supported by the device, which is not limited. The device 102 may obtain the first capture frame rate, and set a capture frame rate of the camera function based on the first capture frame rate, for example, set the capture frame rate of the camera function to be greater than or equal to the first capture frame rate. In this way, the capture frame rate of the camera function of the device 102 may be greater than or equal to the screen refresh rate of the device 101, so that the device 102 scans the N frames of the first image to obtain the V frames of third images. In this application, the capture frame rate of the camera function of the device 102 may be equal to the first capture frame rate, or equal to twice, three times, four times, five times, or the like the first capture frame rate.

Optionally, the device 102 may send second indication information to a device, like a device 103, that is in the first network and that is configured to determine the first capture frame rate. The second indication information indicates a capture frame rate supported by the device 102, so that the device 103 determines the first capture frame rate. The capture frame rate supported by the device 102 includes at least one of a maximum capture frame rate supported by the device 102, a minimum capture frame rate supported by the device 102, or a capture frame rate commonly used by the device 102.

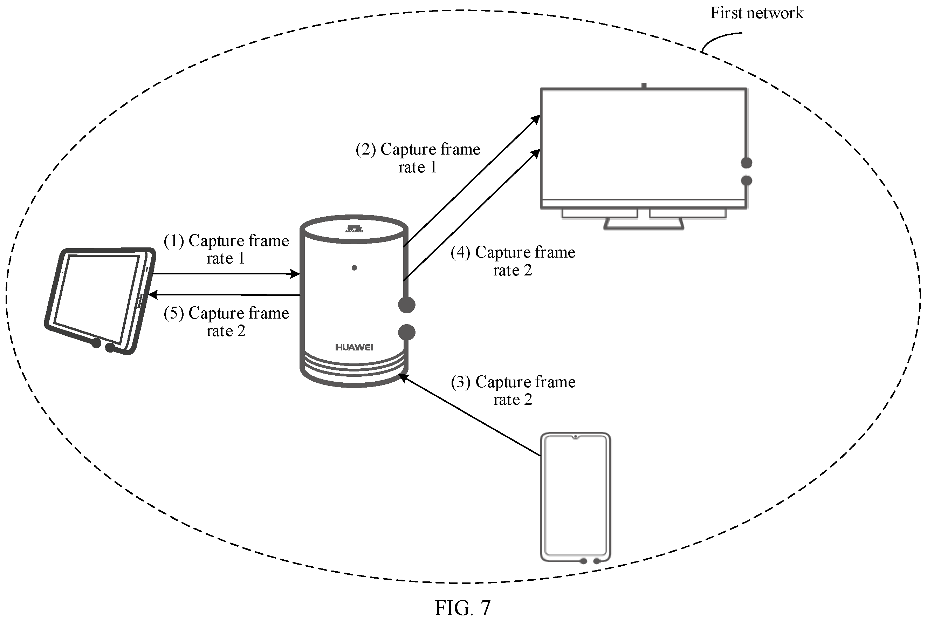

For example, a case in which the foregoing device accesses the first network is described by using an example in which the first network includes a smart screen (corresponding to the foregoing device 101), a mobile phone (corresponding to the foregoing device 102), a house-wide intelligent host (corresponding to the foregoing device 103), and a pad. As shown in FIG. 7, the pad is a device that firstly accesses the network. After accessing the first network, the pad sends a capture frame rate 1 to the house-wide intelligent host. After receiving the capture frame rate 1, the house-wide intelligent host determines the capture frame rate 1 as the first capture frame rate. After the smart screen accesses the first network, the house-wide intelligent host sends the capture frame rate 1 to the smart screen, so that the smart screen sets a screen refresh rate based on the capture frame rate 1 after enabling a screen communication function. After accessing the first network, the mobile phone sends a capture frame rate 2 to the house-wide intelligent host. If the capture frame rate 2 is less than the capture frame rate 1, after receiving the capture frame rate 2, the house-wide intelligent host determines the capture frame rate 2 as the first capture frame rate, and sends the capture frame rate 2 to the smart screen, so that the smart screen sets the screen refresh rate based on the capture frame rate 2 after enabling the screen communication function. The house-wide intelligent host further sends the capture frame rate 2 to the pad, so that the pad sets a screen refresh rate based on the capture frame rate 2 after enabling a screen communication function, or the pad sets a capture frame rate of a camera module based on the capture frame rate 2 when communicating with the smart screen. It may be understood that, if the mobile phone subsequently exits the first network, the house-wide intelligent host may re-determine the first capture frame rate in the first network.

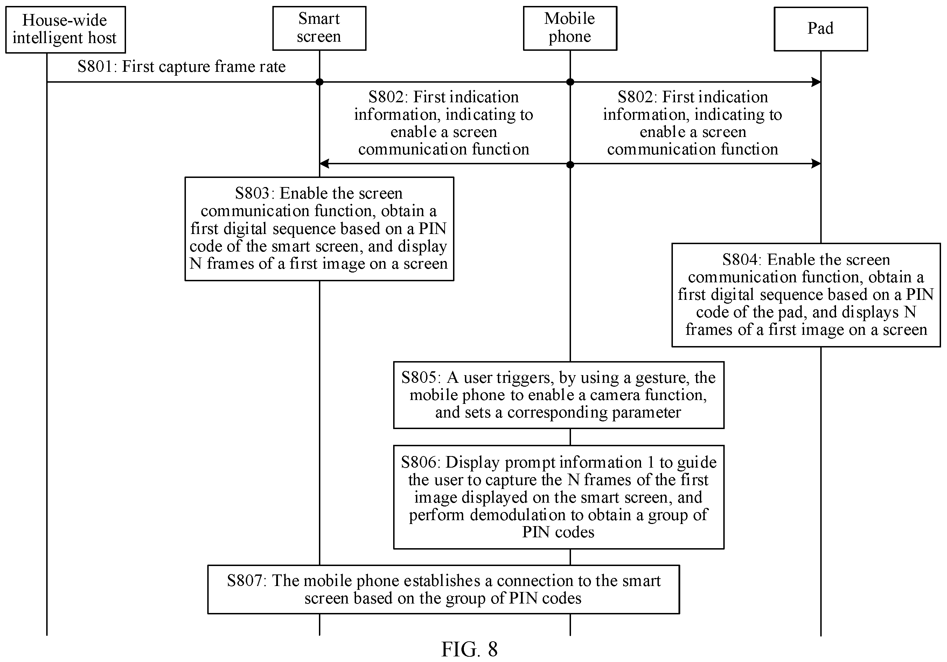

To better understand the method provided in this application, the following describes a complete procedure of the short-range communication method provided in this application by using an example in which the information to be sent is a PIN code, and the first network includes a smart screen (corresponding to the device 101), a mobile phone (corresponding to the device 102), a house-wide intelligent host (corresponding to the device 103), and a pad. It should be understood that descriptions of features and steps in the method shown in FIG. 8 are all applicable to the method shown in FIG. 3, and descriptions of features and steps in the method shown in FIG. 3 are also applicable to the method shown in FIG. 8.

FIG. 8 shows another short-range communication method according to this application. The method may include the following steps.

S801: The house-wide intelligent host separately synchronizes a first capture frame rate to the smart screen, the mobile phone, and the pad.

For a specific process of S801, refer to the foregoing descriptions corresponding to FIG. 7. Details are not described again.

Optionally, the house-wide intelligent host further generates a corresponding PIN code for a screened device in the first network, to obtain a PIN code table, and separately synchronizes the PIN code table to the smart screen, the mobile phone, and the pad. In this example, the PIN code table includes a PIN code of the smart screen, a PIN code of the pad, and a PIN code of the mobile phone. For example, the PIN code table is shown in Table 1. In Table 1, the PIN code of the smart screen is 654-555, the PIN code of the pad is 654-154, and the PIN code of the mobile phone is 334-144.

**Table 1**

| Device identifier | PIN code |
|---|---|
| Smart screen | 654-555 |
| Pad | 654-154 |
| Mobile phone | 334-144 |

S802: The mobile phone broadcasts first indication information in the first network, to indicate to enable a screen communication function. Correspondingly, the smart screen and the pad separately receive the first indication information.

It may be understood that, when a user of the mobile phone wants to communicate with the screened device in the first network, the mobile phone may be triggered to broadcast the first indication information in the first network.

S803: The smart screen enables the screen communication function, obtains a first digital sequence based on the PIN code of the smart screen, and displays N frames of the first image on a screen.

S804: The pad enables the screen communication function, obtains a first digital sequence based on the PIN code of the pad, and displays N frames of the first image on a screen.

It may be understood that processes of S803 and S804 are similar to processes of S301 to S303. For details, refer to corresponding descriptions in S301 to S303. It should be understood that the first digital sequence obtained through modulation by the smart screen is different from the first digital sequence obtained through modulation by the pad, and the N frames of the first image displayed on the smart screen are also different from the N frames of the first image displayed on the pad.

It may be understood that an execution sequence of S803 and S804 is not limited in this application. For example, S803 may be performed before S804, or S804 may be performed before S803, or S803 and S804 are performed simultaneously.

S805: A user triggers, by using a gesture, the mobile phone to enable a camera function, and sets a corresponding parameter.

S806: The mobile phone displays prompt information 1 to guide the user to capture the N frames of the first image displayed on the smart screen, and performs demodulation to obtain a group of PIN codes.

In this application, the prompt information 1 may include a camera preview interface and a capture timing box. A capture duration of the user is greater than or equal to preset duration, so that the mobile phone captures the complete N frames of the first image.

Optionally, the mobile phone calculates confidence of the group of PIN codes. For example, the mobile phone calculates the confidence of the PIN codes based on a noise variance of received signals and a noise power of the received signals. If the confidence is less than a threshold, the mobile phone may guide the user to perform capture again. In this example, it is assumed that the confidence is greater than or equal to the threshold.

S807: The mobile phone establishes a connection to the smart screen based on the group of PIN codes.

In a possible implementation, the mobile phone queries the PIN code table for the group of PIN codes, and if the group of PIN codes is found, establishes a connection to the smart screen based on the group of PIN codes. Optionally, if the connection succeeds, the mobile phone further displays prompt information 2, for example, "the connection succeeds"; or if the connection fails, the mobile phone may guide the user to perform capture again. If the group of PIN codes is not found, the mobile phone may guide the user to perform capture again. Optionally, the mobile phone may further display prompt information 3 based on demodulation information. For example, if a signal is found to be weak in a demodulation process, the mobile phone may display "there is no target in the capture range", and subsequently, the mobile phone may guide the user to align the camera with a target. If it is found in the demodulation process that captured information is incomplete, the mobile phone may display "a capture duration is excessively short", and subsequently, the mobile phone may guide the user to increase the capture duration. If it is found in the demodulation process that a signal feature changes significantly, the mobile phone may display "severe camera shake", and subsequently, the mobile phone may guide the user to perform stable capture.

In a possible implementation, the mobile phone establishes the connection to the smart screen in a wireless manner like Wi-Fi or Bluetooth. For example, the mobile phone sends the group of PIN codes to the smart screen through Wi-Fi or Bluetooth. After receiving the group of PIN codes, the smart screen is connected to the mobile phone based on the group of PIN codes.

It may be understood that, if a center frequency *f_{c}* of a modulated signa is equal to 30 Hz, a lowest frequency *fₗ* of the modulated signal is equal to 15 Hz, and a screen refresh rate of the smart screen is 60 FPS, in a slow playback mode of the screen, the PIN code (6 digits) of the smart screen needs to be of 20 bits, and corresponding playback lasts 1.33 seconds. Therefore, according to the method in this application, the mobile phone can establish the connection to the smart screen within 1.5 seconds, with strong directivity and simple user operations. The mobile phone can scan the smart screen within a range of about 1 meter or more. A specific range depends on a size of the smart screen.

Optionally, the mobile phone may broadcast third indication information in the first network, to indicate to disable the screen communication function.

Optionally, if the smart screen exits the first network, the house-wide intelligent host may delete the PIN code of the smart screen, and broadcasts a latest PIN code table in the first network. If the mobile phone exits the first network, the house-wide intelligent host may delete the PIN of the mobile phone, updates the first capture frame rate, and broadcasts a latest PIN code table and an updated first capture frame rate in the first network. If the pad exits the first network, the house-wide intelligent host may delete the PIN code of the pad, updates the first capture frame rate, and broadcasts a latest PIN code table and an updated first capture frame rate in the first network.

It may be understood that the actions of the house-wide intelligent host, the mobile phone, the smart screen, or the pad in S801 to S807 may be performed by the processor 210 in the electronic device 20 shown in FIG. 2 by invoking application code stored in the memory 221. This is not limited in this application.

In some embodiments, when the user of the mobile phone wants to communicate with the screened device (for example, the smart screen or the pad) in the first network, the mobile phone may be triggered to communicate with the device 103 (for example, the house-wide intelligent host), and the device 103 communicates with the device 101 (for example, the smart screen or the pad), so that the device 101 (for example, the smart screen or the pad) enables the screen communication function.

Embodiments mentioned above in this application may be combined when the solutions do not conflict. This is not limited.

The foregoing mainly describes the solutions provided in this application from a perspective of interaction between devices. Correspondingly, this application further provides an electronic device. The electronic device may be the device 101 in the foregoing method embodiments, or an apparatus including the device 101, or a component that can be used in the device 101; or the electronic device may be the device 102 in the foregoing method embodiments, or an apparatus including the device 102, or a component that can be used in the device 102. It can be understood that the foregoing device 101, device 102, or the like includes a corresponding hardware structure and/or software module for performing each function, to implement the foregoing functions. A person skilled in the art should easily be aware that, in combination with the examples described in embodiments disclosed in this specification, units, algorithms, and operations may be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this application, functional modules of the device 101 or the device 102 may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. During actual implementation, there may be another division manner.

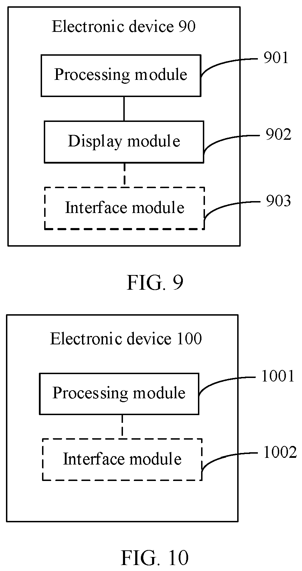

For example, when the functional modules are obtained through division in an integrated manner, FIG. 9 is a diagram of a structure of an electronic device 90. The electronic device 90 includes a processing module 901 and a display module 902. Optionally, the electronic device 90 further includes an interface module 903. The processing module 901 may also be referred to as a processing unit, and is configured to perform an operation other than a sending operation, a receiving operation, and a display operation, which may be, for example, a processing circuit or a processor. The display module 902 may also be referred to as a display unit, and is configured to perform a display operation, which may be, for example, a display. The interface module 903 may also be referred to as an interface unit, and is configured to perform a sending operation and a receiving operation, which may be, for example, an interface circuit, a transceiver machine, a transceiver, or a communication interface.

In some embodiments, the electronic device 90 may further include a storage module (not shown in FIG. 9), configured to store program instructions and data.

For example, the electronic device 90 is configured to implement a function of the device 101. For example, the electronic device 90 is the device 101 in the embodiment shown in FIG. 3, or the smart screen or the pad in the embodiment shown in FIG. 8.

The processing module 901 is configured to obtain a first digital sequence based on information to be sent. The first digital sequence indicates N signals, and N is an integer greater than 1. For example, the processing module 901 may be configured to perform S302.

The display module 902 is configured to continuously display N frames of the first image on a screen of a first device. The N frames of the first image correspond to N consecutive frames of the second image, the N frames of the second image are the content displayed on the screen of the first device when a screen communication function is not enabled on the first device, a visual perception result of the N frames of the first image by a user is the same as a visual perception result of the N frames of the second image by the user, a variation pattern of color information of the N frames of the first image is related to a variation pattern of the N signals, color information of an i^{th} frame of the first image indicates an accumulated color value of pixels in the i^{th} frame of the first image, and i is an integer greater than 1 and less than or equal to N. For example, the display module 902 may be configured to perform S303.

In a possible implementation, that the visual perception result of the user on the N frames of the first image is the same as the visual perception result of the user on the N frames of the second image includes: A screen refresh rate of the first device is greater than or equal to a first threshold; an absolute value of a difference between a luminance of a first pixel in the i^{th} frame of the first image and a luminance of the first pixel in an i^{th} frame of the second image is less than or equal to a second threshold, where the first pixel is any pixel on the screen of the first device; and an absolute value of a difference between first color information and second color information is less than or equal to a third threshold, where the first color information is color information of the first pixel in M consecutive frames of the first image among the N frames of the first image, the second color information is color information of the first pixel in M frames of the second image corresponding to the M frames of the first image, and M is an integer greater than 1 and less than or equal to N.

In a possible implementation, the processing module 901 is specifically configured to modulate the information to be sent at a first bandwidth and a first frequency to obtain the first digital sequence.

In a possible implementation, that the variation pattern of the color information of the N frames of the first image is related to the variation pattern of the N signals includes: Within the first bandwidth, the variation pattern of the color information of the N frames of the first image is related to the variation pattern of the N signals at frequency, or the variation pattern of the color information of the N frames of the first image is related to the variation pattern of the N signals in the time domain.

In a possible implementation, the first frequency is less than or equal to half of the screen refresh rate of the first device.

In a possible implementation, the display module 902 is further configured to continuously display R frames of the first image on the screen of the first device, where the R frames of the first image correspond to R consecutive frames of the second image, the R frames of the second image are the content displayed on the screen of the first device when the screen communication function is not enabled on the first device, a visual perception result of the R frames of the first image by a user is the same as a visual perception result of the R frames of the second image by the user, a variation pattern of color information of the R frames of the first image is related to a variation pattern of R signals, color information of a j^{th} frame of the first image indicates an accumulated color value of pixels in the j^{th} frame of the first image, the R signals are signals indicated by a synchronization sequence, R is an integer greater than 1, j is an integer greater than 1 and less than or equal to R, and a time period in which the R frames of the first image are displayed on the screen of the first device is different from a time period in which the N frames of the first image are displayed on the screen of the first device.

In a possible implementation, the processing module 901 is further configured to obtain the synchronization sequence, where the synchronization sequence is modulated at a second frequency, and the second frequency is different from the first frequency.

In a possible implementation, the display module 902 is specifically configured to: respectively fuse the N signals in the N frames of the second image, and continuously display the N frames of the first image on the screen of the first device.

In a possible implementation, each frame of the first image includes P areas, positions and sizes of the P areas in any two frames of the first image are the same, the first digital sequence further indicates (P-1)*N signals, the first digital sequence includes P sequences, each sequence indicates N consecutive signals among P*N signals, the P areas correspond to the P sequences, a variation pattern of color information of N frames in each area is related to a variation pattern of N consecutive signals corresponding to the area, and P is an integer greater than 1.

In a possible implementation, a variation pattern of luminance information of the N frames of the first image is related to the variation pattern of the N signals.

In a possible implementation, luminance information of the i^{th} frame of the first image indicates an accumulated luminance value of pixels in the i^{th} frame of the first image.

In a possible implementation, that the variation pattern of the luminance information of the N frames of the first image is related to the variation pattern of the N signals includes: Within the first bandwidth, the variation pattern of the luminance information of the N frames of the first image is consistent with the variation pattern of the N signals in the frequency domain, or the variation pattern of the luminance information of the N frames of the first image is linearly correlated with the variation pattern of the N signals in the time domain, where the first bandwidth is a modulation bandwidth of the first digital sequence.

In a possible implementation, each frame of the first image includes the P areas, the positions and the sizes of the P areas included in any two frames of the first image are the same, the first digital sequence further indicates the (P-1)*N signals, the first digital sequence includes the P sequences, each sequence indicates the N consecutive signals among the P*N signals, the P areas correspond to the P sequences, a variation pattern of luminance information of the N frames in each area is related to the variation pattern of the N consecutive signals corresponding to the area, and P is an integer greater than 1.

In a possible implementation, the interface module 903 is configured to access a first network; the processing module 901 is further configured to obtain a first capture frame rate, where the first capture frame rate is a lowest capture frame rate in a capture frame rate supported by a device with a camera function in the first network; and the processing module 901 is further configured to set the screen refresh rate of the first device based on the first capture frame rate.

In a possible implementation, the interface module 903 is further configured to receive first indication information, where the first indication information indicates to enable the screen communication function.

When the electronic device 90 is configured to implement functions of the device 101, for other functions that can be implemented by the electronic device 90, refer to related descriptions of the embodiment shown in FIG. 3 or the embodiment shown in FIG. 8. Details are not described again.

In a simple embodiment, a person skilled in the art may figure out that the electronic device 90 may be in the form shown in FIG. 2. For example, the processor 210 in FIG. 2 may invoke the computer-executable instructions stored in the memory 221, to cause the electronic device 90 to perform the method in the foregoing method embodiments.

For example, a function/implementation process of the processing module 901, the display module 902, and the interface module 903 in FIG. 9 may be implemented by the processor 210 in FIG. 2 by invoking the computer-executable instructions stored in the memory 221. Alternatively, a function/implementation process of the processing module 901 in FIG. 9 may be implemented by the processor 210 in FIG. 2 by invoking the computer-executable instructions stored in the memory 221; a function/implementation process of the display module 902 in FIG. 9 may be implemented by the display 290 in FIG. 2; and a function/implementation process of the interface module 903 in FIG. 9 may be implemented by the mobile communication module 250 or the wireless communication module 260 in FIG. 2.

For example, when the functional modules are obtained through division in an integrated manner, FIG. 10 is a diagram of a structure of an electronic device 100. The electronic device 100 includes a processing module 1001. Optionally, the electronic device 100 further includes an interface module 1002. The processing module 1001 may also be referred to as a processing unit, and is configured to perform an operation other than a sending operation and a receiving operation, which may be, for example, a processing circuit or a processor. The interface module 1002 may also be referred to as an interface unit, and is configured to perform a sending operation and a receiving operation, which may be, for example, an interface circuit, a transceiver machine, a transceiver, or a communication interface.

In some embodiments, the electronic device 100 may further include a storage module (not shown in FIG. 10), configured to store program instructions and data.

For example, the electronic device 100 is configured to implement a function of the device 102. For example, the electronic device 100 is the device 102 in the embodiment shown in FIG. 3, or the mobile phone in the embodiment shown in FIG. 8.

The processing module 1001 is configured to scan, by using the camera function, N frames of the first image displayed on a screen of a first device, and perform demodulation to obtain information to be received, where N is an integer greater than 1. For example, the processing module 1001 may be configured to perform S304.

In a possible implementation, the interface module 1002 is configured to access a first network; the processing module 1001 is further configured to obtain a first capture frame rate, where the first capture frame rate is a lowest capture frame rate in a capture frame rate supported by a device with a camera function in the first network; and the processing module 1001 is further configured to set a capture frame rate of the camera function based on the first capture frame rate.

In a possible implementation, the interface module 1002 is further configured to send first indication information, where the first indication information indicates to enable the screen communication function.

In a possible implementation, the interface module 1002 is further configured to send second indication information, where the second indication information indicates a capture frame rate supported by the second device.

When the electronic device 100 is configured to implement functions of the device 102, for other functions that can be implemented by the electronic device 100, refer to related descriptions of the embodiment shown in FIG. 3 or the embodiment shown in FIG. 8. Details are not described again.

In a simple embodiment, a person skilled in the art may figure out that the electronic device 100 may be in the form shown in FIG. 2. For example, the processor 210 in FIG. 2 may invoke the computer-executable instructions stored in the memory 221, to cause the electronic device 100 to perform the method in the foregoing method embodiments.

For example, a function/implementation process of the processing module 1001 and the interface module 1002 in FIG. 10 may be implemented by the processor 210 in FIG. 2 by invoking the computer-executable instructions stored in the memory 221. Alternatively, a function/implementation process of the processing module 1001 in FIG. 10 may be implemented by the processor 210 in FIG. 2 by invoking the computer-executable instructions stored in the memory 221; and a function/implementation process of the interface module 1002 in FIG. 10 may be implemented by the mobile communication module 250 or the wireless communication module 260 in FIG. 2.

It may be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may be built into a SoC (System-on-a-Chip) or an ASIC, or may be an independent semiconductor chip. In addition to the core configured to perform operations or processing by executing the software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes a memory. Optionally, the chip system may include a chip, or may include a chip and another discrete component. This is not specifically limited in this application.

Optionally, this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the electronic device in any one of the foregoing embodiments, for example, a hard disk drive or a memory of the electronic device. The computer-readable storage medium may alternatively be an external storage device of the electronic device, for example, a plug-in hard disk drive, a smart media card (smart media card, SMC), a secure digital (secure digital, SD) card, or a flash card (flash card) that is configured on the electronic device. Further, the computer-readable storage medium may alternatively include both an internal storage unit and an external storage device of the foregoing electronic device. The computer-readable storage medium is configured to store the computer program and other programs and data required by the foregoing electronic device. The computer-readable storage medium may be further configured to temporarily store data that has been output or is to be output.

Optionally, this application further provides a computer program product. All or some of procedures in the foregoing method embodiments may be implemented by a computer program instructing related hardware. The program may be stored in the computer program product. When the program is executed, the procedures in the foregoing method embodiments may be included.

Optionally, this application further provides a computer program (product). All or some of the procedures in the foregoing method embodiments may be implemented by a computer program or instructions included in the computer program (product) instructing related hardware (such as a computer, a processor, a device 101, or a device 102). The computer program or instructions may be stored in the foregoing computer-readable storage medium or the foregoing computer program product.

Optionally, this application further provides a communication system, including the device 101 and the device 102 in the foregoing embodiments. Optionally, the communication system further includes the device 103 in the foregoing embodiments.

The foregoing descriptions about implementations allow a person skilled in the art to understand that, for the purpose of convenient and brief descriptions, division of the foregoing functional modules is used as an example for illustration. In actual application, the foregoing functions can be allocated as needed to be implemented by different functional modules, that is, an inner structure of an apparatus is divided into different functional modules to implement all or some of the functions described above.

In the several embodiments provided in this application, it should be understood that the disclosed apparatus and method may be implemented in other manners. For example, the apparatus embodiments are merely examples. For example, division of the modules and the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A short-range communication method, wherein the method comprises:
obtaining a first digital sequence based on information to be sent, wherein the first digital sequence indicates N signals, and N is an integer greater than 1; and
continuously displaying N frames of a first image on a screen of a first device, wherein the N frames of the first image correspond to N consecutive frames of a second image, the N frames of the second image are the content displayed on the screen of the first device when a screen communication function is not enabled on the first device, a visual perception result of the N frames of the first image by a user is the same as a visual perception result of the N frames of the second image by the user, a variation pattern of color information of the N frames of the first image is related to a variation pattern of the N signals, color information of an i^{th} frame of the first image indicates an accumulated color value of pixels in the i^{th} frame of the first image, and i is an integer greater than 1 and less than or equal to N.

2. The method according to claim 1, wherein that the visual perception result of the N frames of the first image by the user is the same as the visual perception result of the N frames of the second image by the user comprises:
a screen refresh rate of the first device is greater than or equal to a first threshold;
an absolute value of a difference between a luminance of a first pixel in the i^{th} frame of the first image and a luminance of the first pixel in an i^{th} frame of the second image is less than or equal to a second threshold, wherein the first pixel is any pixel on the screen of the first device; and
an absolute value of a difference between first color information and second color information is less than or equal to a third threshold, wherein the first color information is color information of the first pixel in M consecutive frames of the first image among the N frames of the first image, the second color information is color information of the first pixel in M frames of the second image corresponding to the M frames of the first image, and M is an integer greater than 1 and less than or equal to N.

3. The method according to claim 1 or 2, wherein the obtaining the first digital sequence based on the information to be sent comprises:
modulating the information to be sent at a first bandwidth and a first frequency to obtain the first digital sequence.

4. The method according to claim 3, wherein that the variation pattern of the color information of the N frames of the first image is related to the variation pattern of the N signals comprises:
within the first bandwidth, the variation pattern of the color information of the N frames of the first image is related to the variation pattern of the N signals in the frequency domain, or the variation pattern of the color information of the N frames of the first image is related to the variation pattern of the N signals in the time domain.

5. The method according to claim 3 or 4, wherein the first frequency is less than or equal to half of the screen refresh rate of the first device.

6. The method according to any one of claims 3 to 5, wherein the method further comprises:
continuously displaying R frames of the first image on the screen of the first device, wherein the R frames of the first image correspond to R consecutive frames of the second image, the R frames of the second image are the content displayed on the screen of the first device when the screen communication function is not enabled on the first device, a visual perception result of the R frames of the first image by a user is the same as a visual perception result of the R frames of the second image by the user, a variation pattern of color information of the R frames of the first image is related to a variation pattern of R signals, color information of a j^{th} frame of the first image indicates an accumulated color value of pixels in the j^{th} frame of the first image, the R signals are signals indicated by a synchronization sequence, R is an integer greater than 1, j is an integer greater than 1 and less than or equal to R, and a time period in which the R frames of the first image are displayed on the screen of the first device is different from a time period in which the N frames of the first image are displayed on the screen of the first device.

7. The method according to claim 6, wherein the method further comprises:
obtaining the synchronization sequence, wherein the synchronization sequence is modulated at a second frequency, and the second frequency is different from the first frequency.

8. The method according to any one of claims 1 to 7, wherein the continuously displaying the N frames of the first image on the screen of the first device comprises: fusing the N signals with the N frames of the second image respectively, and continuously displaying the N frames of the first image on the screen of the first device.

9. The method according to any one of claims 1 to 8, wherein each frame of the first image comprises P areas, positions and sizes of the P areas in any two frames of the first image are the same, the first digital sequence further indicates (P-1)*N signals, the first digital sequence comprises P sequences, each sequence indicates N consecutive signals among P*N signals, the P areas correspond to the P sequences, a variation pattern of color information of N frames in each area is related to a variation pattern of N consecutive signals corresponding to the area, and P is an integer greater than 1.

10. The method according to any one of claims 1 to 9, wherein a variation pattern of luminance information of the N frames of the first image is related to the variation pattern of the N signals.

11. The method according to claim 10, wherein luminance information of the i^{th} frame of the first image indicates an accumulated luminance value of pixels in the i^{th} frame of the first image.

12. The method according to claim 10 or 11, wherein that the variation pattern of the luminance information of the N frames of the first image is related to the variation pattern of the N signals comprises:
within the first bandwidth, the variation pattern of the luminance information of the N frames of the first image is related to the variation pattern of the N signals in the frequency domain, or the variation pattern of the luminance information of the N frames of the first image is related to the variation pattern of the N signals in the time domain, wherein the first bandwidth is a modulation bandwidth of the first digital sequence.

13. The method according to any one of claims 10 to 12, wherein each frame of the first image comprises the P areas, the positions and the sizes of the P areas in any two frames of the first image are the same, the first digital sequence further indicates the (P-1)*N signals, the first digital sequence comprises the P sequences, each sequence indicates the N consecutive signals among the P*N signals, the P areas correspond to the P sequences, a variation pattern of luminance information of the N frames in each area is related to the variation pattern of the N consecutive signals corresponding to the area, and P is an integer greater than 1.

14. The method according to any one of claims 1 to 13, wherein the method further comprises:
accessing a first network;
obtaining a first capture frame rate, wherein the first capture frame rate is a lowest capture frame rate in a capture frame rate supported by a device with a camera function in the first network; and
setting the screen refresh rate of the first device based on the first capture frame rate.

15. The method according to any one of claims 1 to 14, wherein the method further comprises:
receiving first indication information, wherein the first indication information indicates to enable the screen communication function.

16. An electronic device, wherein the electronic device comprises a processing module and a display module, wherein
the processing module is configured to obtain a first digital sequence based on information to be sent, wherein the first digital sequence indicates N signals, and N is an integer greater than 1; and
the display module is configured to continuously display N frames of the first image on a screen of the electronic device, wherein the N frames of the first image correspond to N consecutive frames of the second image, the N frames of the second image are the content displayed on the screen of the electronic device when a screen communication function is not enabled on the electronic device, a visual perception result of the N frames of the first image by a user is the same as a visual perception result of the N frames of the second image by the user, a variation pattern of color information of the N frames of the first image is related to a variation pattern of the N signals, color information of an i^{th} frame of the first image indicates an accumulated color value of pixels in the i^{th} frame of the first image, and i is an integer greater than 1 and less than or equal to N.

17. The electronic device according to claim 16, wherein that the visual perception result of the user on the N frames of the first image is the same as the visual perception result of the user on the N frames of the second image comprises:
a screen refresh rate of the electronic device is greater than or equal to a first threshold;
an absolute value of a difference between a luminance of a first pixel in the i^{th} frame of the first image and a luminance of the first pixel in an i^{th} frame of the second image is less than or equal to a second threshold, wherein the first pixel is any pixel on the screen of the electronic device; and
an absolute value of a difference between first color information and second color information is less than or equal to a third threshold, wherein the first color information is color information of the first pixel in M consecutive frames of the first image among the N frames of the first image, the second color information is color information of the first pixel in M frames of the second image corresponding to the M frames of the first image, and M is an integer greater than 1 and less than or equal to N.

18. The electronic device according to claim 16 or 17, wherein
the processing module is specifically configured to modulate the information to be sent at a first bandwidth and a first frequency to obtain the first digital sequence.

19. The electronic device according to claim 18, wherein that the variation pattern of the color information of the N frames of the first image is related to the variation pattern of the N signals comprises:
within the first bandwidth, the variation pattern of the color information of the N frames of the first image is related to the variation pattern of the N signals in the frequency domain, or the variation pattern of the color information of the N frames of the first image is related to the variation pattern of the N signals in the time domain.

20. The electronic device according to claim 18 or 19, wherein the first frequency is less than or equal to half of the screen refresh rate of the electronic device.

21. The electronic device according to any one of claims 18 to 20, wherein the display module is further configured to continuously display R frames of the first image on the screen of the electronic device, wherein the R frames of the first image correspond to R consecutive frames of the second image, the R frames of the second image are the content displayed on the screen of the electronic device when the screen communication function is not enabled on the electronic device, visual perception result of the R frames of the first image by a user is the same as a visual perception result of the R frames of the second image by the user, a variation pattern of color information of the R frames of the first image is related to a variation pattern of R signals, color information of a j^{th} frame of the first image indicates an accumulated color value of pixels in the j^{th} frame of the first image, the R signals are signals indicated by a synchronization sequence, R is an integer greater than 1, j is an integer greater than 1 and less than or equal to R, and a time period in which the R frames of the first image are displayed on the screen of the electronic device is different from a time period in which the N frames of the first image are displayed on the screen of the electronic device.

22. The electronic device according to claim 21, wherein the processing module is further configured to obtain the synchronization sequence, wherein the synchronization sequence is modulated at a second frequency, and the second frequency is different from the first frequency.

23. The electronic device according to any one of claims 16 to 22, wherein the display module is specifically configured to: respectively fuse the N signals and the N frames of the second image, and continuously display the N frames of the first image on the screen of the electronic device.

24. The electronic device according to any one of claims 16 to 23, wherein each frame of the first image comprises P areas, positions and sizes of the P areas in any two frames of the first image are the same, the first digital sequence further indicates (P-1)*N signals, the first digital sequence comprises P sequences, each sequence indicates N consecutive signals among P*N signals, the P areas correspond to the P sequences, a variation pattern of color information of N frames in each area is related to a variation pattern of N consecutive signals corresponding to the area, and P is an integer greater than 1.

25. The electronic device according to any one of claims 16 to 24, wherein a variation pattern of luminance information of the N frames of the first image is related to the variation pattern of the N signals.

26. The electronic device according to claim 25, wherein luminance information of the i^{th} frame of the first image indicates an accumulated luminance value of pixels in the i^{th} frame of the first image.

27. The electronic device according to claim 25 or 26, wherein that the variation pattern of the luminance information of the N frames of the first image is related to the variation pattern of the N signals comprises: within the first bandwidth, the variation pattern of the luminance information of the N frames of the first image is related to the variation pattern of the N signals in the frequency domain, or the variation pattern of the luminance information of the N frames of the first image is related to the variation pattern of the N signals in the time domain, wherein the first bandwidth is a modulation bandwidth of the first digital sequence.

28. The electronic device according to any one of claims 25 to 27, wherein each frame of the first image comprises the P areas, the positions and the sizes of the P areas comprised in any two frames of the first image are the same, the first digital sequence further indicates the (P-1)*N signals, the first digital sequence comprises the P sequences, each sequence indicates the N consecutive signals among the P*N signals, the P areas correspond to the P sequences, a variation pattern of luminance information of N frames in each area is related to the variation pattern of the N consecutive signals corresponding to the area, and P is an integer greater than 1.

29. The electronic device according to any one of claims 16 to 28, wherein the electronic device further comprises an interface module, wherein
the interface module is configured to access a first network;
the processing module is further configured to obtain a first capture frame rate, wherein the first capture frame rate is a lowest capture frame rate in a capture frame rate supported by a device with a camera function in the first network; and
the processing module is further configured to set the screen refresh rate of the electronic device based on the first capture frame rate.

30. The electronic device according to any one of claims 16 to 29, wherein the electronic device further comprises an interface module, wherein
the interface module is configured to receive first indication information, wherein the first indication information indicates to enable the screen communication function.

31. An electronic device, comprising a processor, wherein the processor is coupled to a memory, the memory is configured to store a program or instructions, and when the program or the instructions are executed by the processor, the electronic device is caused to perform the method according to any one of claims 1 to 15.

32. A chip, comprising a processor, wherein the processor is coupled to a memory, the memory is configured to store a program or instructions, and when the program or the instructions are executed by the processor, the chip is caused to perform the method according to any one of claims 1 to 15.

33. A computer-readable storage medium, wherein the computer-readable storage medium stores a computer program or instructions, and when the computer program or the instructions are executed, a computer is caused to perform the method according to any one of claims 1 to 15.

34. A computer program product, wherein the computer program product comprises computer program code, and when the computer program code is run on a computer, the computer is caused to implement the method according to any one of claims 1 to 15.

35. A communication system, wherein the communication system comprises the electronic device according to any one of claims 16 to 30 and a second device, and the second device is configured to: scan, by using a camera function, N frames of the first image displayed on a screen of the electronic device, and perform demodulation to obtain information to be received.
